(19) Europäisches Patentamt
European Patent Office
Office européen des brevets

(11) **EP 2 446 703 B1**

(12) **EUROPEAN PATENT SPECIFICATION**

(45) Date of publication and mention
of the grant of the patent:
**15.04.2015  Bulletin 2015/16**

(21) Application number: **11729472.8**

(22) Date of filing: **03.05.2011**

(51) Int Cl.:
***H05B 6/64*** (2006.01)

(86) International application number:
**PCT/IB2011/001377**

(87) International publication number:
**WO 2011/138679 (10.11.2011 Gazette 2011/45)**

(54) **ANTENNA PLACEMENT IN DEGENERATE MODAL CAVITIES OF AN ELECTROMAGNETIC ENERGY TRANSFER SYSTEM**

ANTENNENPLATZIERUNG IN ABGEBAUTEN MODALHOHLRÄUMEN EINES SYSTEMS ZUR ÜBERTRAGUNG ELEKTROMAGNETISCHER ENERGIE

PLACEMENT D'ANTENNE(S) DANS DES CAVITÉS MODALES DÉGÉNÉRÉES D'UN SYSTÈME DE TRANSFERT D'ÉNERGIE ÉLECTROMAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2010  US 282983 P**
**03.05.2010  US 282981 P**
**03.05.2010  US 282980 P**
**03.05.2010  US 282986 P**
**03.05.2010  US 282985 P**
**03.05.2010  US 282984 P**

(43) Date of publication of application:
**02.05.2012  Bulletin 2012/18**

(73) Proprietor: **Goji Limited**
**Hamilton HM08 (BM)**

(72) Inventors:
• **EINZIGER, Pinchas**
**34655 Haifa (IL)**
• **RAPPEL, Amit**
**90627 Ofra (IL)**
• **DIKAROV, Denis**
**44643 Kfar Saba (IL)**
• **SIGALOV, Michael**
**84786 Beer-Sheva (IL)**
• **BIBERMAN, Yoel**
**35435 Haifa (IL)**

(74) Representative: **Korenberg, Alexander Tal et al**
**Kilburn & Strode LLP**
**20 Red Lion Street**
**London WC1R 4PJ (GB)**

(56) References cited:
**EP-A1- 2 051 564     WO-A1-02/23953**
**WO-A1-91/07069**

**Description**

## TECHNICAL FIELD

The present invention relates to apparatuses and methods for applying electromagnetic energy to objects.

## BACKGROUND

Electromagnetic waves are commonly used to apply energy to various types of objects. One example of an electromagnetic wave-generating device is a microwave oven. While typical microwave ovens heat faster than conventional ovens, a microwave oven will often exhibit hot and cold spots in the object being heated due to a phenomenon known as "standing waves." A standing wave is characterized by local electrical field peaks and valleys where the absolute values of the electrical field intensity are the greatest, and zeroes where the absolute values are the smallest. The absolute value of an electrical field intensity may be referred to as the magnitude of the field. As the field intensity varies over the length of a standing wave, so too does its heating capacity.

Conventional microwave ovens typically use a microwave source (e.g., a magnetron) to generate microwaves at a single frequency (e.g., 2.45 GHz). Accordingly, a single field distribution may be formed in the conventional microwave ovens. Therefore, if a portion of an object is covered by areas with low field magnitudes, it may be difficult to heat that portion no matter how much power is used for heating. One way to reduce hot spots and cold spots in a microwave oven is to cause various field distributions in the oven, such that the combination of these field distributions may include less hot or cold spots. An electrical field distribution (e.g., the locations of the peaks, valleys and zeros of the standing waves) in the oven is determined by the frequency of the electromagnetic energy applied. Therefore, some conventional microwave ovens attempt to introduce variations in the field distribution in the microwave ovens, for example, by generating microwaves at multiple frequencies. WO91/07069A1 describes a radiofrequency wave apparatus including an applicator which provides multiple, sequenced processing modes.

## SUMMARY

In a first aspect of the invention there is provided an apparatus for applying electromagnetic energy at a frequency in the frequency range of 1MHz to 100 GHz to heat an object, as set out in claim 1. In a second aspect of the invention there is provided a method of applying electromagnetic energy at a frequency in the frequency range of 1 MHz to 100 GHz to heat an object in a degenerate cavity via at least one source of electromagnetic energy and a plurality of radiating elements, as set out in claim 8. Further, optional features of embodiments of the invention are set out in the dependent claims.

As used herein, an object (e.g., a processor) is described to be configured to perform a task (e.g., cause application of electromagnetic energy at a frequency that excites a plurality of modes), if, at least in some embodiments, the object performs this task in operation. Similarly, when a task is described to be in order to establish a target result (e.g., in order to excite a plurality of modes at a single frequency) this means that, at least in some embodiments, the task is carried out such that the target result is accomplished.

## BRIEF DESCRIPTION OF THE DRAWINGS

The accompanying drawings, which are incorporated in and constitute a part of this specification, illustrate various embodiments and, together with the description, explain principles of the invention. In the drawings:

Fig. 1 is a schematic diagram of an apparatus for applying electromagnetic energy to an object;
Figs. 2A-2D illustrate degenerate cavities;
Fig. 3A illustrates a rectangular cavity in a Cartesian coordinate system;
Fig. 3B illustrates a cylindrical cavity in a cylindrical coordinate system;
Figs. 4A-4C illustrates cross-section views of a resonant modes excited in a rectangular cavity;
Fig. 5A-5C illustrate cross-sectional views of three field patterns excited in a degenerate rectangular cavity at a single frequency,;
Fig. 6A is a schematic diagram of an apparatus configured to vary the frequency of the electromagnetic waves supplied to the energy application zone;
Fig. 6B is a schematic diagram of an apparatus configured to vary the phase difference between two electromagnetic fields supplied to the energy application zone;
Fig. 6C illustrates an exemplary modulation space;
Figs. 7A-7B illustrate exemplary antenna placement/selection strategies;

Figs 8A-8E illustrate exemplary antenna placement/selection strategies in a degenerate cavity;

Figs 9A-9D illustrate exemplary energy application zone discretization strategies;

Fig. 10A is an exemplary flow chart of a method for applying electromagnetic energy to the degenerate energy application zone;

Fig. 10B is another exemplary flow chart of a method for applying electromagnetic energy to the degenerate energy application zone.

Fig. 11 provides an exemplary flow chart of a method for applying electromagnetic energy to an energy application zone; and

Fig. 12 provides another exemplary flow chart of a method for applying electromagnetic energy to the energy application zone.

## DESCRIPTION OF EXEMPLARY EMBODIMENTS

Reference will now be made in detail to exemplary embodiments of the invention examples of which are illustrated in the accompanying drawings. When appropriate, the same reference numbers are used throughout the drawings to refer to the same or like parts.

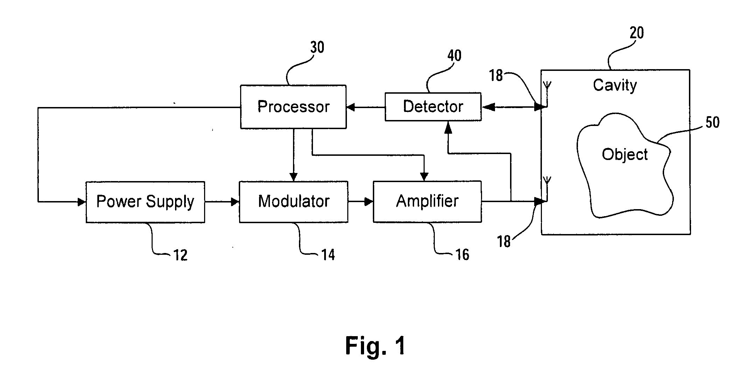

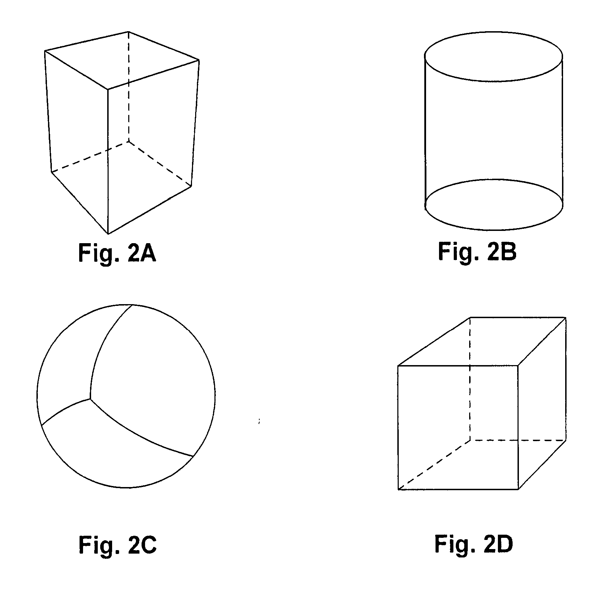

Reference is now made to Fig.1 illustrating an apparatus for applying electromagnetic energy to an object, in accordance with some embodiments of the invention. Some embodiments of the invention may involve a source of electromagnetic energy (e.g., including a power supply 12 and at least one radiating element 18), regulated by a processor 30. For simplicity of the drawing, the source is not explicitly marked in the figure. The electromagnetic energy may be applied to an energy application zone, e.g., cavity 20. The energy application zone may be configured in a degenerate shape, for example those shapes illustrated in Figs. 2A-2D. As employed in accordance with some embodiments of the invention, the degenerate shape, as described later in greater detail, is used to enable multiple resonant modes to be excited using a single frequency. That is, a frequency of electromagnetic radiation emitted by the source may be held constant, and yet two or more distinct resonant modes may be achieved. This may occur using processor 30 which may control the way energy is applied, as will described later in greater detail.

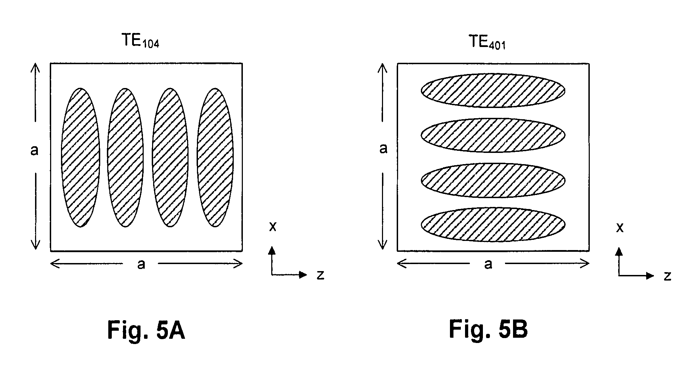

Conceptually, the result of such control is exemplified in Figs. 5A and 5B. Fig. 5A conceptualizes one resonant mode ($TE_{104}$) achieved using a predetermined frequency, while Fig. 5B conceptualizes a second and distinct resonant mode ($TE_{401}$) achieved using the same predetermined frequency. Figs. 5A and 5B illustrate the field intensities of $TE_{104}$ and $TE_{401}$ respectively. In the example of Figs. 5A and 5B, while the frequency was held constant, another variable (e.g., phase or relative amplitude or position of the radiating element emitting the energy) was varied in order to achieve the second mode.

Because the modes exhibit predictable areas of energy intensity, the ability to generate and control the modes permits control of energy applied in the energy application zone. And with some embodiments of the invention, this predictability may exist with multiple modes achieved using a common frequency.

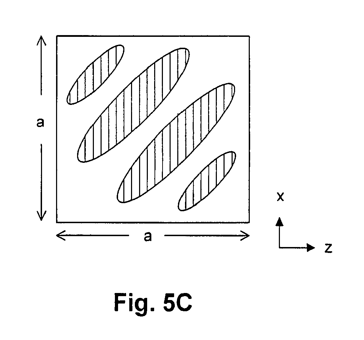

In some embodiments, the modes of Figs. 5A and 5B may be applied simultaneously, in which case the dashed areas (illustrating higher energy regions, which may also be referred to as "hot spots"), may be obtained in a different angle respective to the x axis. For example, when the two modes are applied at equal amplitudes, a "diagonal" field pattern, as illustrated in Fig. 5C may be obtained. The "diagonal" field pattern is a linear combination of the two modes TE104 and TE401. Thus, if we denote the electrical field pattern shown in Fig. 5A as E5A, the electrical field pattern shown in Fig. 5B as E5B, and the electrical field pattern shown in Fig. 5C as E5C, then E5C=1/2 E5A + 1/2E5B. Fig. 5C illustrates the field intensities of E5C. If the weights are different, the angle will be different. If the weights are varied in time in an appropriate manner, the field pattern may rotate (e.g., angular shift) in the energy application zone. For example, if E3C changes in time according to the equation E5C=$\sin(\alpha t)$ E5A + $\cos(\alpha t)$ E5B, the field rotates at constant angular frequency of $\alpha$ rounds per second. Such rotation of the field pattern may be useful to achieve a more uniform time-averaged heating in the energy application zone than is achievable with a combination that is constant over time. Replacing the weights $\sin(\alpha t)$ and $\cos(\alpha t)$ with constants, which do not vary in time, may freeze the field pattern to achieve a desired non-uniformity, for example, of the kind illustrated in Fig. 5C.

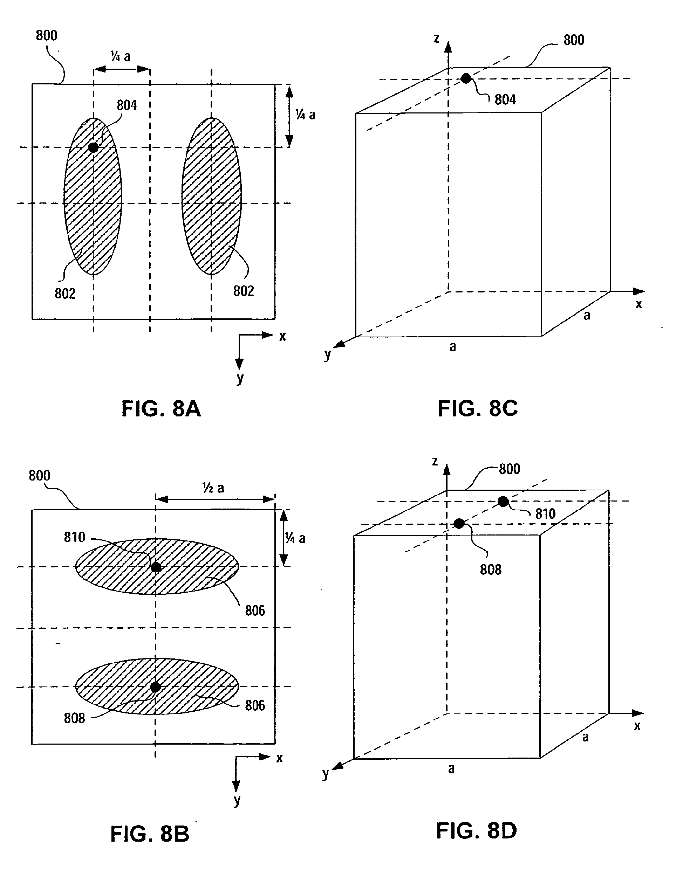

In some embodiments the excitation of at least one desired mode may be determined by the positioning or location in the energy application zone of at least one radiating element 18. A single radiating element may excite in an energy application a plurality of modes. As used herein, the term "excited" is interchangeable with "generated," "created," and "applied". Some of the excited modes may be resonant modes. A radiating element may excite all the modes supported by the energy application zone as long as the radiating element is not coinciding with the null (i.e., zero field intensity) mode. Some of the modes are more "effectively" excited than others. With the energy supplied from the power supply, modes that are effectively excited in the zone may apply higher amounts of energy to the zone than modes that are not effectively excited. When the radiating element is located close to the intensity maxima and in particular when the radiating element coincides with the intensity maxima, the mode is effectively excited in the energy application zone. When at least two radiating elements are used, non-desired modes may be rejected by applying the same amount of energy using the same frequency but in opposite directions, as will be discussed in greater detail with respect to Figs. 8D and 8C. In some embodiments, it may be advantageous to reject undesired modes in order to have better control of the modes excited in the energy application zone.

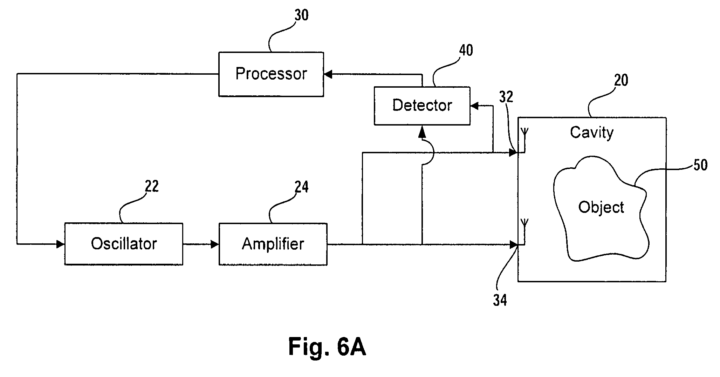

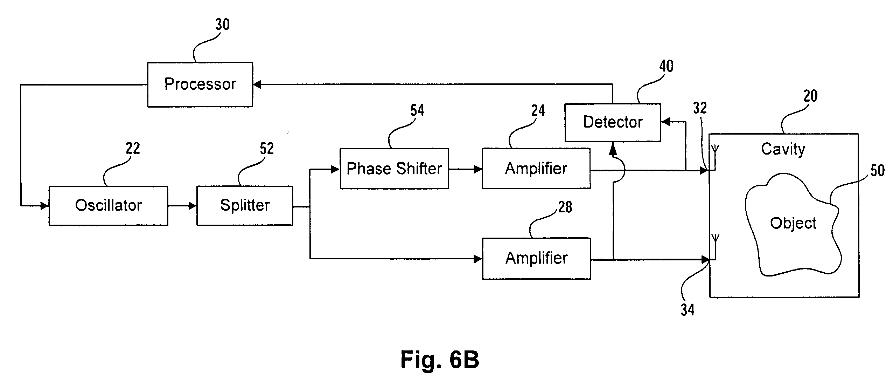

In some respects, the invention may involve apparatuses and methods for applying electromagnetic energy to an object in an energy application zone. As used herein, the term "apparatus" may include any component or group of components described herein. For example, an "apparatus" as broadly used herein may refer only to a processor, such as processor 30, as illustrated, for example, in Figures 1, 6A, and 6B. Alternatively, an "apparatus" may include a combination of a processor and one or more radiating elements, such as elements 18 in Figure1 and elements 32 and 34 in Figures 6A and 6B; a processor, a cavity, and one or more radiating elements; a processor and a source of electromagnetic energy; a processor, a cavity, one or more radiating elements, and a source of electromagnetic energy; or any other combination of components described herein.

The term electromagnetic energy, as used herein, includes energy within any or all portions of the electromagnetic spectrum, including but not limited to, radio frequency (RF), infrared (IR), near infrared, visible light, ultraviolet, etc. In some cases, applied electromagnetic energy may include RF energy with a wavelength of 100 km to 1 mm, which is a frequency of 3 KHz to 300 GHz, respectively. In some cases, RF energy within a narrower frequency range, e.g., 1 MHz-100 GHz, may be applied. Microwave and ultra high frequency (UHF) energy, for example, are both within the RF range. Even though examples of the invention are described herein in connection with the application of RF energy, these descriptions are provided to illustrate a few exemplary principles of the invention, and are not intended to limit the invention to any particular portion of the electromagnetic spectrum.

Similarly, for exemplary purposes, this disclosure contains a number of examples of electromagnetic energy used for heating. Again, these descriptions are provided to illustrate exemplary principles of the invention. The invention, as described and claimed, may provide benefit for various products and industrial, commercial, and consumer processes involving the application of energy, regardless of whether the application of energy results in a temperature rise. For example, electromagnetic energy may also be applied to an object for heating, combusting, thawing, defrosting, cooking, drying, accelerating reactions, expanding, evaporating, sintering, fusing, causing or altering biologic processes, medical treatments, preventing freezing or cooling, maintaining the object within a desired temperature range, or any other application where it is desirable to apply energy.

Moreover, reference to an "object" (also known as a "load") to which electromagnetic energy is applied is not limited to a particular form. An "object" may include a liquid, solid, or gas, depending upon the particular process with which the invention is utilized, and the object may include composites or mixtures of matter in one or more differing phases. Further, although the term "object" is in the singular, it may refer to multiple items or detached parts or components. Thus, by way of nonlimiting example, the term "object" may encompass such matter as food to be thawed or cooked; clothes or other material to be dried; frozen material (e.g., organs) to be thawed; chemicals to be reacted; fuel or other combustible material to be to be combusted; hydrated material to be dehydrated, gases to be expanded; liquids to be thawed, heated, boiled or vaporized, blood or blood components (e.g., blood plasma or red blood cells) to be thawed and/or warmed, materials to be manufactured, components to be connected, or any other material for which there is a desire to apply, even nominally, electromagnetic energy.

In accordance with the invention, an apparatus or method may further involve the use of an "energy application zone". An energy application zone may be any void, location, region, or area where electromagnetic energy may be applied. It may include a hollow and/or may be filled or partially filled with liquids, solids, gases, or combinations thereof. By way of example only, an energy application zone may include the interior of an enclosure, interior of a partial enclosure (e.g., conveyor belt oven), interior of a conduit, open space, solid, or partial solid, which allows for the existence, propagation, and/or resonance of electromagnetic waves. The zone may be permanent or may be temporarily constituted for purposes of energy application. For ease of discussion, all such alternative energy application zones may alternatively be referred to as cavities, with the understanding that the term "cavity" implies no particular physical structure other than an area in which electromagnetic energy may be applied.

The energy application zone may be located in an oven, chamber, tank, dryer, thawer, dehydrator, reactor, engine, chemical or biological processing apparatus, furnace, incinerator, material shaping or forming apparatus, conveyor, combustion zone, or any area where it may be desirable to apply energy. Thus, consistent with some embodiments, the electromagnetic energy application zone may be an electromagnetic resonator (also known as cavity resonator, resonant cavity, or simply "cavity" for short). The electromagnetic energy may be applied to an object when the object or a portion thereof is located in the energy application zone.

By way of example, an energy application zone, e.g., cavity 20, is illustrated schematically in Fig. 1, where object 50 is positioned in cavity 20. It is to be understood that object 50 need not be completely located in the energy application zone. That is, object 50 is considered "in" the energy application zone if at least a portion of the object is located in the zone.

An energy application zone may have a predetermined configuration (e.g., cavity shape) or a configuration that is otherwise determinable, so long as physical aspects of its configuration are known at a time of energy application. In some respects, an energy application zone may assume any shape that permits electromagnetic wave propagations inside the energy application zone. For example, all or part of the energy application zone may have a cross-section that is spherical, hemisphere, rectangular, toroidal, circular, triangular, oval, pentagonal, hexagonal, octagonal, elliptical, or any other shape or combination of shapes. In some respects, the energy application zone may have particular shape such as degenerate shapes (e.g., as illustrated in Figs. 2A-2D) as described later. It is also contemplated that the energy application zone may be closed, i.e., completely enclosed by conductor materials, bounded at least partially, or open, i.e., having non-bounded openings. The invention in its broadest sense is not limited to any particular degree of closure, although in some applications, a high degree of closure may be preferred.

In accordance with the invention, an apparatus or method may involve the use of a source of electromagnetic energy for applying electromagnetic energy to the object. A "source" may include any components suitable for generating and/or applying and/or modifying electromagnetic energy, including at times one or more of each of the following components: power supply, signal generator, signal modulator (for example phase and/or frequency modulators), amplifier and radiating element. Consistent with the invention, electromagnetic energy may be applied to the energy application zone in the form of propagating electromagnetic waves at any wavelengths or frequencies (also known as electromagnetic radiation). As used herein, "propagating electromagnetic waves" may include resonating waves, evanescent waves, and waves that travel through a medium in any other manner. Electromagnetic radiation carries energy that may be imparted to (or dissipated into) matter with which it interacts.

By way of example, the apparatus may include at least one of a power supply 12, a modulator 14, an amplifier 16, one or more radiating elements 18, and a detector 40, as illustrated in Fig. 1. In some embodiments, one or more of power supply 12, modulator 14, amplifier 16, one or more radiating elements 18, and detector 40 may be part of the source. Power supply 12 may be configured to generate electromagnetic waves that carry electromagnetic energy. For example, power supply 12 may include electromagnetic energy generating components, for example, a magnetron configured to generate microwave waves at a predetermined wavelength or frequency. In some embodiments, the magnetron may be configured to generate high power microwaves. Alternatively or additionally, power supply 12 may include a semiconductor oscillator, such as a voltage controlled oscillator, configured to generate AC waveforms (e.g., AC voltage or current) with a constant or varying frequency. AC waveforms may include sinusoidal waves, square waves, pulsed waves, triangular waves, or another type of waveforms with alternating polarities. Alternatively or additionally, a source of electromagnetic energy may include any other power supply, such as electromagnetic field generator, electromagnetic flux generator, or any mechanism for generating vibrating electrons.

In some embodiments, the apparatus may include at least one modulator 14 configured to modify one or more characteristic parameters of the electromagnetic waves generated by power supply 12, in a controlled manner. For example, modulator 14 may be configured to modify one or more parameters of a periodic waveform, including amplitude (e.g., an amplitude difference between different radiating elements), phase, and frequency. The process of modifying is known as "modulation".

In some embodiments, modulator 14 may include, for example, at least one of a phase modulator, a frequency modulator, and an amplitude modulator configured to modify the phase, frequency, and amplitude of the AC waveform, respectively. Exemplary phase modulator and amplitude modulator are discussed in greater detail later, for example in connection with Fig. 6A and 6B. In some embodiments, modulator 14 may be integrated as part of power supply 12 or the source, such that the AC waveforms generated by power supply 12 may have at least one of a varying frequency, a varying phase, and varying amplitude over time.

The apparatus may also include an amplifier 16 for amplifying, for example, the AC waveforms before or after they are modified by modulator 14. The amplifier may or may not be part of the source. Amplifier 16 may be, for example, a power amplifier including one or more power transistors. As another example, amplifier 16 may be a step-up transformer having more turns in the secondary winding than in the primary winding. In other embodiments, amplifier 16 may also be a power electronic device such as an AC-to-DC-to-AC converter. Alternatively or additionally, amplifier 16 may include any other device(s) or circuit(s) configured to scale up an input signal to a desired level.

The apparatus may also include at least one radiating element 18 configured to transmit (apply) the electromagnetic energy to object 50. The radiating element may or may not be part of the source. Radiating element 18 may include one or more waveguides and/or one or more antennas (also known as power feeds) for supplying electromagnetic energy to object 50. For example, radiating element 18 may include slot antennas. Alternatively, radiating element 18 may also include waveguides or antennas of any other kind or form, or any other suitable structure from which electromagnetic energy may be emitted.

Power supply 12, modulator 14, amplifier 16, and radiating element(s) 18 (or portions thereof) may be separate components or any combination of them may be integrated as a single component. Power supply 12, modulator 14, amplifier 16, and radiating element 18 (or portions thereof) may be parts of the source. For example, a magnetron may be used as power supply 12 to generate electromagnetic energy, and a waveguide may be physically attached to the magnetron for applying the energy to object 50. Alternatively, the radiating element may be separate from the magnetron. Optionally, other types of electromagnetic generators may be used where the radiating element may be for example either physically separate from or part of the generator or otherwise connected to the generator.

In some embodiments, more than one radiating element may be provided. The radiating elements may be located on one or more surfaces of the energy application zone. Alternatively, radiating elements may be located inside and/or outside the energy application zone. When the radiating elements are located outside the zone, they may be coupled to elements that would allow the radiated energy to reach the energy application zone. Elements for allowing the radiated energy to reach the energy application zone may include, for example, wave guides and/or antennas. The orientation and configuration of each radiating element may be distinct or the same, as may be required for obtaining a target goal, for example, application of a desired energy distribution in the energy application zone. Furthermore, the location, orientation, and configuration of each radiating element may be predetermined before applying energy to object 50, or dynamically adjusted using a processor while applying energy. The invention in its broadest sense is not limited to radiating elements having particular structures or which are necessarily located in particular areas or regions. However, placing radiating elements in certain places, or selecting amplitudes of waves emitted from different radiating elements in accordance with their location, orientation, and/or configuration may be used. It is noted that the terms "region" and "area" are used herein interchangeably, to refer to any particular extent of space or surface.

In addition to radiating (emitting) electromagnetic energy, one or more radiating element(s) 18 may also be configured to receive electromagnetic energy. In other words, as used herein, the term "radiating element" broadly refers to any structure from which electromagnetic energy may radiate and/or by which electromagnetic energy may be received, regardless of whether the structure was originally designed for the purposes of radiating or receiving energy, and regardless of whether the structure serves any additional function. Thus, an apparatus or method in accordance with some embodiments of the invention may involve the use of one or more detectors configured to detect signals associated with electromagnetic waves received by the one or more radiating elements. For example, as shown in Fig. 1, detector 40 may be coupled to radiating elements 18 that, when functioning as receivers, receive electromagnetic waves from cavity 20.

As used herein, the term "detector" may include an electric circuit that measures or senses one or more parameters associated with electromagnetic waves. For example, such a detector may include a power meter configured to detect a level of the power associated with the incident, reflected and/or transmitted electromagnetic wave (also known as "incident power," "reflected power," and "transmitted power," respectively), an amplitude detector configured to detect an amplitude of the wave, a phase detector configured to detect a phase of the wave, a frequency detector configured to detect a frequency of the wave, and/or any other circuit suitable for detecting a characteristic of an electromagnetic wave. As used herein, incident power may be supplied to a radiating element functioning as a transmitter by the source, and then emitted (applied) into the energy application zone 20 by the transmitter. Of the incident power, a portion may be dissipated by the object (referred to herein as "dissipated power"). A portion of the dissipated power may be dissipated in the energy application zone (e.g., cavity walls and/or cavity entrance). This portion, however, may be substantially small in comparison to the power that is dissipated in the object and, therefore, may be neglected in some embodiments. Another portion may be reflected at the radiating element (i.e., "reflected power"). Reflected power may include, for example, power reflected back to the radiating element via the object and/or the energy application zone. Reflected power may also include power retained by the port of the transmitter (i.e., power that is emitted by the antenna but does not flow into the zone). The rest of the incident power, other than the reflected power and dissipated power, may be transmitted to one or more radiating element functioning as receivers (i.e., "transmitted power.").

The detector may be a directional coupler, configured to allow signals to flow from the amplifier to the radiating elements when the radiating elements function as transmitters (e.g., when the radiating elements radiate energy), and to allow signals to flow from the radiating elements to the amplifier when the radiating elements function as receivers (e.g., when the radiating element receive energy). Additionally, the directional coupler may be further configured to measure the power of a flowing signal. The detector may also include other types of circuits that measure the voltage and/or current at the ports.

As previously mentioned, an energy application zone may be of a degenerate shape (referred herein as a "degenerate energy application zone"). A degenerate energy application zone may typically have at least two symmetric dimensions, and such symmetry may exist about an axis, for example, as in the case of a cylinder, a cube, any other prism that has a square, hexagonal or octagonal or other symmetrical cross-section, or other volumes with a round cross-section. Alternatively, symmetry may exist about a point, for example, in the case of a sphere. Due to such symmetry, a degenerate energy application zone may look identical after being rotated by a certain degree around its axis of symmetry or point of symmetry.

Thus, degenerate energy application zones may include volumes having at least one of a square cross-section and a circular cross-section, such as the exemplary degenerate cavities shown in Figs. 2A and 2B, respectively. In these cases, the energy application zone is known to have one dimension of degeneracy, that is, a cross-section is degenerate. The degenerate energy application zone may also be a sphere or a cuboid, such as the exemplary degenerate cavities shown in Figs. 2C and 2D, respectively. These cavities are symmetric about a central point. In particular, the spherical cavity shown in Fig. 2C is degenerate by nature because any cross-section is inherently symmetric.

A degenerate energy application zone may support two or more resonant modes that share a mode family, at a single resonant frequency. The term "resonant", "resonating" or "resonance" refers to the tendency of electromagnetic waves to oscillate in the energy application zone at larger amplitudes at some frequencies (known as "resonant frequencies" or "resonance frequencies") than at others. Energy application zones may be designed with dimensions permitting it to be resonant in a predetermined range of frequencies (e.g., the UHF or microwave range of frequencies, for example between 300 MHz and 3 GHz, or between 400 MHz and 1 GHZ). Electromagnetic waves resonating at a particular resonance frequency may have a corresponding "resonance wavelength" that is inversely proportional to the resonance frequency, determined by $\lambda = c/f$, where $\lambda$ is the resonance wavelength, $f$ is the resonance frequency, and c is the propagating speed of the electromagnetic waves in the energy application zone. The propagating speed may change depending on the medium through which the wave propagates. Therefore, when the energy application zone comprises more than one material, c may not be uniquely defined. Nevertheless, the resonance wavelength may be uniquely determined using a slightly different relation, including, for example, using an estimation based on c of the major component or an average of the c of miscellaneous components, or any other technique known in the art.

When the electromagnetic waves are emitted at some specific frequencies, special field patterns, known as "modes," may be excited. A mode of electromagnetic radiation is a particular electromagnetic field pattern of radiation measured in a plane perpendicular to the propagation direction of the wave. The propagation of electromagnetic waves may be described by a wave equation. The wave equation is a second-order linear partial differential equation of waves, including electromagnetic waves. A mode may correspond to a solution of the wave equation for a particular set of boundary conditions. A set of boundary conditions characterizes the behavior of the electromagnetic field at the boundaries of any wave propagating media. For example, on the boundary between a dielectric medium and a perfect electric conductor (PEC), the tangential component of the electric field and the normal component of the magnetic field are both zero. In other words, modes include a set of spatial field patterns that are linearly independent from each other and orthogonal to one another. As referred herein, two field patterns are orthogonal to each other if the integral of the scalar product of the two fields associated with the two modes over the energy application zone is zero. A mode or a combination of modes can be of any known type, including propagating, evanescent, and resonant. In particular, the inventors have recognized that energy application may be more effectively controlled by exciting a variety of different resonant modes in the energy application zone. Any field pattern that may be excited in an energy application zone may be represented mathematically as a linear combination of modes. The modes may include an infinite number of evanescent modes and a finite number of propagating modes (some of which may be resonant modes). In some embodiments, the excited field pattern may include a combination of mainly resonant modes. More descriptions of modes, the wave equation, and boundary conditions may be found in references, such as Collin, Robert E. Foundations for Microwave Engineering, 2nd Edition, Wiley-Interscience 2001.

Resonant modes are modes that are excited in an energy application zone at resonant frequencies associated with the zone. Consistent with presently disclosed embodiments, the degenerate energy application zone may support two or more resonant modes that share a mode family. For a given cavity, the wave equation may yield a set of modes in the same mode families, i.e. modes that correspond to the same set of boundary conditions. If a cavity can support more than a single mode at a same frequency in the same family, it is a degenerate cavity.

In some embodiments, modes in a same mode family may be of a same transverse type. A resonant mode may be of any known transverse type, including transverse electromagnetic (TEM), transverse electric (TE), transverse magnetic (TM), and hybrid. A "transverse mode" of electromagnetic radiation, as referred herein, is a particular electromagnetic field pattern of radiation measured in a plane perpendicular (i.e. transverse) to the propagation direction of the electromagnetic wave. For example, in a TE mode, the electric field is zero in the direction of propagation. In a TM mode, the magnetic field is zero in the direction of propagation. In a TEM mode, both electric field and magnetic field are zero in the direction of propagation, while in a hybrid mode, both electric field and magnetic field may be non-zero in the direction of propagation.

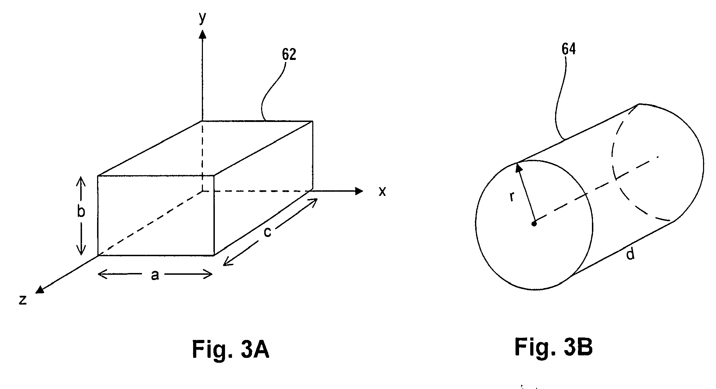

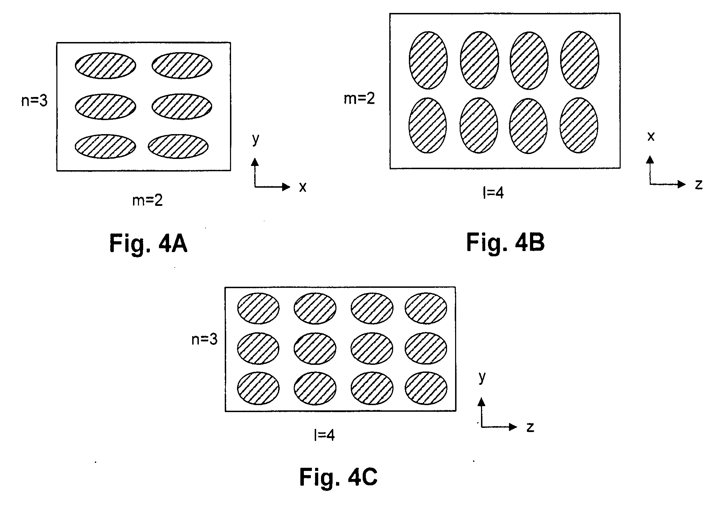

By way of example, Fig. 3A illustrates a rectangular resonant cavity 62 having physical dimensions of a, b, and c, in the x, y, and z directions, respectively. A standing wave pattern in cavity 62 may have integer number of half-wavelengths along each of the three directions. Therefore, a resonant mode excited in cavity 62 may be uniquely identified using its transverse type (e.g., TE, TM, TEM, etc.), and a combination of three integers (m, n, 1), where m, n, 1 refer to the number of half-- wavelengths in the standing wave pattern in the x, y, z directions, respectively. Fig. 4A-4C show three cross-sectional views of mode $TE_{234}$ in the x-y plane, x-z plane, and y-z plane, respectively. The shaded ovals represent areas where magnitudes of field intensity are higher than a certain threshold value. It is hereby noted that while shaded ovals may be diagrammatically illustrated as having a clear and defined border, in reality the intensity changes in a more gradual manner.

The resonant frequency corresponding to a specific resonant mode may be uniquely determined based on the geometry (e.g., shape and dimensions) of the energy application zone (e.g., cavity shape). For example, the resonant frequencies of cavity 62, as shown in Fig. 3A, may be determined mathematically as:

$$f_{mnl} = \frac{c}{2\pi\sqrt{\mu_r \varepsilon_r}} \sqrt{\left(\frac{m\pi}{a}\right)^2 + \left(\frac{n\pi}{b}\right)^2 + \left(\frac{l\pi}{c}\right)^2} \quad (1)$$

where $\mu_r$ and $\varepsilon_r$ are the relative permeability and relative permittivity of the material in cavity 62. In one embodiment, if $\mu_r = \varepsilon_r = 1$, $a=0.3$ m, $b=0.4$ m, and $c=0.5$ m, accordingly to equation (1), the resonant frequencies of modes $TM_{102}$, $TE_{213}$, and $TM_{111}$ are approximately 781 MHz, 1.396 GHz, and 693 MHz, respectively.

By way of another example, Fig. 3B illustrates a cylindrical resonant cavity 64 having physical dimensions of $r$, and $d$, corresponding to the radius and length, respectively. The resonant frequencies of the $TE_{nml}$ modes and $TM_{nml}$ modes in cavity 64 may be determined mathematically as:

$$f_{nml}(TE) = \frac{c}{2\pi\sqrt{\mu_r \varepsilon_r}} \sqrt{\left(\frac{\rho_{nm}}{r}\right)^2 + \left(\frac{l\pi}{d}\right)^2} \quad (2)$$

$$f_{nml}(TM) = \frac{c}{2\pi\sqrt{\mu_r \varepsilon_r}} \sqrt{\left(\frac{\rho'_{nm}}{r}\right)^2 + \left(\frac{l\pi}{d}\right)^2} \quad (3)$$

where $\rho_{nm}$ refers to the m-th zero of Bessel function of the first kind $J_n(x)$, and $\rho'_{nm}$ refers to the m-th zero of the derivative of the Bessel function of the first kind $J'_n(x)$. In one embodiment, if $\mu_r = \varepsilon_r = 1$, and $r=0.3$ m, $d=0.5$ m, accordingly to equations (2) and (3), the resonant frequencies of modes $TM_{102}$, $TE_{213}$, and $TM_{111}$ are approximately 1.343 GHz, 1.772 GHz, and 2.007 GHz, respectively.

Generally, for a given energy application zone, at most one resonant mode of a transverse mode may be supported at each resonant frequency, because of the unique mapping relationship between a resonance frequency and a particular combination of $m$, $n$, and $l$. However, for a degenerate energy application zone, two or more resonant mode of a same transverse mode may be supported at a single resonance frequency. For example, assuming that the cross-section in the x-y plane is degenerate, then any frequency that can excite $TE_{mnl}$ mode in the cavity can also excite $TE_{nml}$ mode in the cavity.

Using rectangular cavity 62 of Fig. 3A as an example, when $a=b$, that is, the cross-section of cavity 62 in the x-y plane is square, cavity 62 becomes a degenerate cavity. For example, assuming $\mu_r = \varepsilon_r = 1$, $a=b=0.3$m and, $c$-0.5m, cavity 62 may support two TE modes ($TE_{213}$ and $TE_{123}$) at the frequency of 1.436 GHz. In comparison, when $a>b>c$, cavity 62 is a non-degenerate cavity. For example, assuming $\mu_r = \varepsilon_r = 1$, and $a=0.3$m, $b=0.4$m, $c=0.5$m, cavity 62 may support only one TE mode ($TE_{213}$) and one TM mode ($TM_{213}$) at the frequency of 1.396 GHz. Cylindrical cavity 64 of Fig. 3B is degenerate by nature as the result of its circular cross-section which is symmetric about a central axis.

An apparatus or method of the invention may further involve the use of a processor. As used herein, the term "processor" may include an electric circuit that executes one or more instructions. For example, such a processor may include one or more integrated circuits, microchips, microcontrollers, microprocessors, all or part of a central processing unit (CPU), graphics processing unit (GPU), digital signal processors (DSP), field-programmable gate array (FPGA) or other circuit suitable for executing instructions or performing logic operations.

The instructions executed by the processor may, for example, be pre-loaded into the processor or may be stored in a separate memory unit such as a RAM, a ROM, a hard disk, a optical disk, a magnetic medium, a flash memory, other permanent, fixed, or volatile memory, or any other mechanism capable of providing instructions to the processor. The processor(s) may be customized for a particular use, or can be configured for general-purpose use and perform different functions by executing different software.

If more than one processor is employed, all may be of similar construction, or they may be of differing constructions electrically connected or disconnected from each other. They may be separate circuits or integrated in a single circuit. When more than one processor is used, they may be configured to operate independently or collaboratively. They may be coupled electrically, magnetically, optically, acoustically, mechanically, wirelessly or in any other way permitting at least one signal to be communicated between them.

A single or multiple processors may be provided for the sole purpose of regulating the source. Alternatively, a single or multiple processors may be provided with the function of regulating the source in addition to providing other functions. For example, the same processor(s) used to regulate the source may also be integrated into a control circuit that provides additional control functions to components other than the source.

The at least one processor may regulate the one or more components of the source or apparatus according to a predetermined energy delivery scheme. For example, as depicted in Fig. 1, an exemplary processor 30 may be electrically coupled to various components, for example, power supply 12, modulator 14, amplifier 16, and radiating elements 18. One or more of power supply 12, modulator 14, amplifier 16, and radiating elements 18 may be a component of the source. Processor 30 may be configured to execute instructions that regulate one or more of these components. For example, processor 30 may regulate the level of power supplied by power supply 12. Processor 30 may also regulate the amplification ratio of amplifier 16, by switching for example the transistors in the amplifier. Alternatively or additionally, processor 30 may perform pulse-width-modulation control of amplifier 16 such that the amplifier outputs a desired waveform. Processor 30 may regulate modulations performed by modulator 14. In another example, processor 30 may alternatively or additionally regulate at least one of location, orientation, and configuration of each radiating element 18, for example through an electro-mechanical device. Such an electromechanical device may include a motor or other movable structure for rotating, pivoting, shifting, sliding or otherwise changing the orientation or location of one or more radiating elements 18. Processor 30 may be further configured to regulate any field adjusting elements located in the energy application zone, in order to change the field pattern in the zone. For example, the field adjusting elements may be configured to selectively direct the electromagnetic energy from the radiating element, or to simultaneously match the radiating element that acts as a transmitter to reduce coupling to the other radiating elements that act as receivers.

The at least one processor may be configured to regulate application of electromagnetic energy at a predetermined frequency. For example, processor 30 may regulate a frequency modulator in order to set a frequency of at least one electromagnetic wave supplied to the energy application zone. Such a frequency modulator may be configured to adjust the frequency of an AC waveform. By way of example, the frequency modulator may be a semiconductor oscillator, e.g., oscillator 22 schematically depicted in Fig. 6A, and configured to generate an AC waveform oscillating at a determined frequency. The determined frequency may be associated with an input voltage, current, or other analog or digital signals. For example, a voltage controlled oscillator may be configured to generate waveforms at frequencies proportional to the input voltage. The AC waveform may be amplified by an amplifier, e.g., amplifier 24 schematically depicted in Fig. 6A, to a desired amplitude/power, before input to one or more radiating elements, e.g., antennas 32 and 34 illustrated in Fig. 6A.

The determined frequency may satisfy a "modal condition." The "modal condition" can be expressed as a relationship between the applied frequency $f_1$ and the lowest resonant wavelength $f_0$ that may excite a mode in the energy application zone. In some embodiments, the modal condition may be expressed as $f_1 \le 4f_0$, that is, the electromagnetic energy may be applied at a determined frequency that is lower than about four times the lowest resonance frequency in the energy application zone. When the modal condition is satisfied, energy application to the object may be better controlled and more efficient.

The lowest resonant frequency $f_0$ may be determined as a function of the largest resonant wavelength $\lambda_0$ supported by the energy application zone, using $f_0 = c/\lambda_0$. In some embodiments, the largest resonant wavelength may be known in advance (e.g., programmed into the processor). The largest resonant wavelength $\lambda_0$ may be determined uniquely based on the geometry of cavity 20. For example, for the cubic cavity of Fig. 2D, which is of dimensions $a \times a \times a$, the largest resonant wavelength $\lambda_0$ may be given by $\sqrt{2}a$. As another example, for the spherical cavity of Fig. 2C, with a radius $r$, the largest resonant wavelength $\lambda_0$ may be given by $\dfrac{2\pi r}{2.744}$. As yet another example, for cylindrical cavity 64 of Fig. 3B, with a radius $r$ and a length $d$, then if $2r>d$ the largest resonant wavelength $\lambda_0$ may be given by $\dfrac{2\pi r}{2.405}$, and if $2r<d$ the largest resonant wavelength $\lambda_0$ may be given by $\dfrac{2\pi r}{\sqrt{1.841^2 + \left(\frac{\pi r}{d}\right)^2}}$. As yet another example, for rectangular cavity 62 of Fig. 3A, which is of dimensions $a \times b \times c$, and $a>b>c$, then the largest resonant wavelength $\lambda_0$ may be given by $\dfrac{2ab}{\sqrt{a^2+b^2}}$. Once the largest resonant wavelength $\lambda_0$ and its corresponding lowest resonant frequency $f_0$ are determined, the determined frequency $f_1$ to be used for applying the electromagnetic energy to the energy application zone, according to the modal condition $f_1 \le 4f_0$.

In other embodiments, a different relationship between the wavelength of the applied electromagnetic energy supplied by the source and the largest resonant wavelength supported by the energy application zone may be applied in order to meet the modal condition. In some embodiments, the modal condition is met when low order modes are excited, e.g., $m \times n$ is below 30, 40, or 50 (wherein m and n are integers representing the mode number in different axes, e.g., x and y). In some embodiments, the apparatus may be configured to operate only in a range of wavelengths that satisfy the modal condition of its cavity. In some embodiments, the apparatus may be configured to operate both in wavelengths that satisfy the modal condition, and in wavelengths that do not satisfy this condition.

The determined frequency may be a resonant frequency associated with the energy application zone. For example, in rectangular degenerate cavity 62, the determined frequency may be one that satisfies equation (1). As another example, in cylindrical degenerate cavity 64, the determined frequency may be one that satisfies equation (2) or (3).

The resonant frequencies in a cavity may vary in a presence of a load (e.g., object 50) in the energy application zone. The load presence may change the boundary conditions in the cavity and may cause a shift in the resonance frequencies, such that the frequencies may no longer satisfy equations (1), (2) or (3). The resonant frequencies in the presence of the load may be determined based on feedback from the energy application zone. For example, processor 30 may be configured to receive an analog or digital feedback signal from detector 40, indicating an amount of reflected/transmitted electromagnetic energy from cavity 20 at each of a plurality of frequencies in a working band, in the presence of the load in the cavity (e.g., energy that is reflected back to the radiating element acting as transmitter and/or energy that is transmitted back to radiating element(s) acting as receivers). The resonant frequencies may be determined, as the frequencies having lowest reflected electromagnetic energy picks when the reflected energy is plotted against the frequencies. Optionally, processor 30 may be configured to determine a value indicative of the energy absorbable in the load based on the portion of the incident energy that is reflected and/or the portion that is transmitted. The resonant frequencies may be determined, as the frequencies having the highest energy absorbable picks when the value is plotted against the frequency.

The resonant frequencies may be predicted and may satisfy equations (1), (2) or (3) in a presence of a load when the load is homogeneous and fills substantially the entire energy application zone.

A load may be considered to fill substantially the entire energy application zone if the effect of the unfilled regions is negligible. For example, a load filling substantially the entire energy application zone may fill at least 80%, 85% or 90% of the zone. In some embodiments, the load fills the entire zone except for some excluded volumes that may be occupied, for example, with radiating elements (e.g., RF feeds), detectors, thermometers, or other equipment that may be useful for the operation of the apparatus. Some marginal volumes that are not filled with the object, for example, at corners of a cavity, may also exist in a substantially filled energy application zone.

An example of a homogeneous load is one with no dielectric-boundaries. A dielectric boundary is a line or surface that separates between two regions, each having a significantly different dielectric constant ($\varepsilon_r$). A characteristic size of each of the regions may be of the order of at least about a wavelength in the load. The wavelength in the load may be approximated by an average between the wavelength in both sides of the lines or surface that separates between the regions. A difference in dielectric constant may be considered significant, for example, if the difference is of about 10%. One example of a homogeneous load is a body of water. It is noted that if different portions of the body of water are at different temperatures, for examples, because of non-uniform heating, the dielectric constant of the different portions may differ. If this difference is larger than 10%, however, the body of water may be considered inhomogeneous.

A suspension of oil in water (or of any other two materials) may be considered homogeneous, provided the oil droplets (or particles of other suspended medium) are smaller than the wavelength at the frequency (e.g., smaller than tenth of the wavelength), in the suspension as a whole. This may be so despite of the large difference in dielectric constant between oil and water.

The processor may be configured to regulate the source to apply electromagnetic energy that result in a plurality of resonant modes in the energy application zone at a single determined frequency, wherein the plurality of resonant modes may share a mode family. For example, the plurality of resonant modes may all be of the same transverse type as one another. This phenomenon is facilitated by cavity degeneracy.

A plurality of modes that exist at the same frequency need not occur simultaneously in the zone. Rather, in accordance with some embodiments of the invention, they may occur at differing times or at the same time, so long as more than one resonant mode is excitable with a single frequency.

In accordance with some embodiments of the invention, the at least one processor may be further configured to regulate the source to vary a phase difference between two electromagnetic fields applied at a single predetermined frequency, wherein each resonant mode excited in the degenerate energy application zone corresponds to a phase variation. The source may be regulated to apply electromagnetic energy using two synchronized radiating elements. As referred herein, two radiating elements are "synchronized" if the electromagnetic waves emitted by the two radiating elements have a known phase difference. For example, two radiating elements, e.g., radiating elements 32 and 34 illustrated in Fig. 6A, may apply energy at phases $\varphi_1$ and $\varphi_2$, respectively, where the phase difference $\Delta\varphi$ is constant.

In some embodiments, processor 30 may regulate the source to vary the phases $\varphi_1$ and/or $\varphi_2$ such that energy is applied at differing phase differences. For example, the source may be regulated to apply energy at one phase difference during a first time period, and another phase difference during a second time period. In one example, the phase differences may be so chosen that energy applied at each phase difference may excite one mode, among the plurality of modes. For example, the source may be regulated to apply electromagnetic energy at two phase differences that are 180° apart from each other, so that each phase difference may excite one of two orthogonal modes in a rectangular cavity. As referred herein, two modes are orthogonal to each other if the integral of the scalar product of the two fields associated with the two modes over the energy application zone is zero. Using the example shown in Fig. 5A and 5B, $\Delta\varphi=0°$ may be used to excite $TE_{104}$ and $\Delta\varphi=180°$ may be used to excite $TE_{401}$ in a rectangular degenerate cavity.

In some exemplary embodiments, processor 30 may be configured to regulate a phase modulator in order to alter a phase difference between two electromagnetic waves supplied to the energy application zone. By way of example, the phase modulator may include a phase shifter, such as phase shifter 54, illustrated in Fig. 6B. Phase shifter 54 may be configured to cause a time delay in the AC waveform in a controllable manner within cavity 20, delaying the phase of an AC waveform anywhere from between 0-360 degrees. Alternatively or additionally, the processor may dynamically and/or adaptively regulate modulation based on feedback from the energy application zone. For example, processor 30 may be configured to receive an analog or digital feedback signal from detector 40, indicating an amount of electromagnetic energy received (e.g., detected) from cavity 20, and processor 30 may dynamically determine a time delay at the phase modulator for the next time period based on the received feedback signal.

Phase shifter 54 may include an analog phase shifter configured to provide a continuously variable phase shift or time delay, or phase shifter 54 may include a digital phase shifter configured to provide a discrete set of phase shifts or time delays.

As illustrated in the example depicted in Fig. 6B, a splitter 52 may be provided to split the AC signal generated by oscillator 22 into two AC signals (e.g., split signals). Processor 30 may be configured to regulate phase shifter 54 to sequentially cause various time delays such that the phase difference between the two split signals may vary over time. This sequential process may be referred to as "phase sweeping."

Because the split signals are split from a single signal, the two split AC signals may share substantially the same frequencies. One split AC signal may be shifted by phase shifter 54 for phase $\alpha$, so that the AC signal becomes $\cos[\omega t+\alpha]$. The other split AC signal may be shifted by phase shifter 56 for phase $-\alpha$ (or equivalently 360°-$\alpha$), so that the AC signal becomes $\cos[\omega t-\alpha]$. As illustrated in Fig. 6B, the phase shifted AC signals may be amplified by amplifiers 24 and 28, respectively, and in this manner radiating elements 32 and 34 may be caused to excite electromagnetic waves having a shared AC waveform. Radiating elements 32 and 34 may be positioned at a predetermined distance from each other, so that the two electromagnetic waves excited by the antennas may form an amplitude modulated wave, according to the trigonometric identity $\cos[\omega t-\alpha]+\cos[\omega t+\alpha]=2\cos(\alpha)\cos(\omega t)$.

As with the other examples provided, Fig. 6B is exemplary. It is to be understood that one, two, or more phase shifters can be used applying similar principles of some embodiments of the invention.

As previously mentioned, the at least one processor may regulate the source to apply electromagnetic energy at a plurality of frequencies, e.g., resonant frequencies. For example, processor 30 may be configured to regulate oscillator 22 to sequentially generate AC waveforms oscillating at various frequencies of cavity 20. This sequential process may be referred to as "frequency sweeping." In some embodiments, processor 30 may be configured to select one or more frequencies, and regulate oscillator 22 to sequentially generate AC waveforms at these selected frequencies. In some other embodiments, processor 30 may also regulate more than one sources to apply electromagnetic energy at differing resonant frequencies.

An apparatus for applying electromagnetic energy, for example the apparatus of Figs. 1, 6A and 6B, may be configured to control application of electromagnetic energy at a frequency that excites a plurality of modes in the energy application zone. The plurality of modes may share a mode family. Such control may occur through the selection of "MSEs" (as described later). Choices of MSE selection may influence how energy is distributed in regions of the energy application zone. When the modal condition is not met, it may be more difficult to achieve a desired energy application distribution through the control of MSEs due to the more complex mathematics sometimes needed to describe the electromagnetic field and/or more complicated control schemes required to selectively or effectively excite a desired field pattern (mode). Thus, the modal condition can be used in combination with MSE control to achieve a desired energy distribution. While the modal condition may be used in combination with MSE control, the modal condition may also provide benefits even if not used with MSE control. Conversely, MSE control may be applied even if the modal condition is not met.

In some embodiments, in order to further simplify the energy application control, it may be desired to excite only small number of desired modes and to reject the entire undesired mode. Choices of MSE selection may influence the rejection of undesired modes. An MSE may include the number and location of radiating elements in the energy application zone and application of selected MSEs may result in excitation of only the desired modes.

The term "modulation space" or "MS" is used to collectively refer to all the parameters that may affect a field pattern in the energy application zone and all combinations thereof. In some embodiments, the "MS" may include all possible components that may be used and their potential settings (either absolute or relative to others) and adjustable parameters associated with the components. For example, the "MS" may include a plurality of variable parameters, the number of antennas, their positioning and/or orientation (if modifiable), the useable bandwidth, a set of all useable frequencies and any combinations thereof, power settings, phases, etc. The MS may have any number of possible variable parameters, ranging between one parameter only (e.g., a one dimensional MS limited to frequency only or phase onlyor other single parameter), two or more dimensions (e.g., varying frequency and amplitude together within the same MS), or many more.

Examples of energy application zone-related MSs may include the dimension, and shape of the energy application zone and the materials from which the energy application zone is constructed. Examples of energy source-related MSEs may include amplitude (e.g., an amplitude difference between different radiating elements), frequency, and phase of the energy applied. Examples of radiating element-related MSEs may include the type, number, size, shape, configuration, orientation and placement of radiating elements.

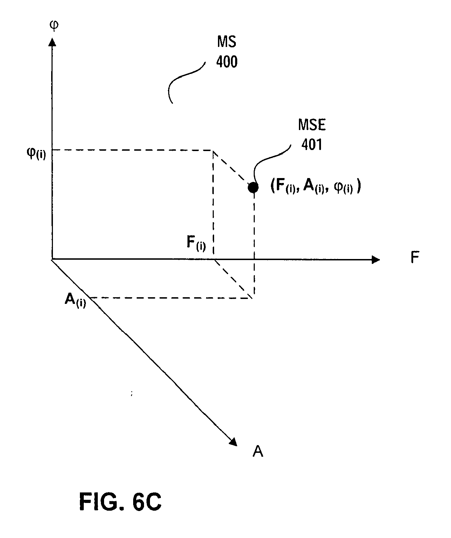

Each variable parameter associated with the MS is referred to as an MS dimension. By way of example, Fig. 6C illustrates a three dimensional modulation space 400, with three dimensions designated as frequency (F), phase ($\varphi$), and amplitude (A). That is, in MS 400, frequency, phase, and amplitude of the electromagnetic waves are capable of being modulated during energy application, while all the other parameters may be predetermined and fixed during energy application. An MS may also be one dimensional where only one parameter is varied during energy delivery, or any other higher-dimensional where more than one parameters are varied. In Fig. 6C, the modulation space is depicted in three dimensions for ease of discussion only. The MS may have many more dimensions.

The term "modulation space element" or "MSE," may refer to a specific set of values of the variable parameters in MS. Therefore, the MS may also be considered to be a collection of all possible MSEs. For example, two MSEs may differ one from another in the relative amplitudes of the energy being supplied to a plurality of radiating elements. For example, Fig. 6C shows an MSE 401 in the three-dimensional MS 400. MSE 401 has a specific frequency F(i), a specific phase $\varphi(i)$, and a specific amplitude A(i). If even one of these MSE variables change, then the new set defines another MSE. For example, (3 GHz, 30°, 12 V) and (3 GHz, 60°, 12 V) are two different MSEs, although only the phase component changes. Sequentially swept MSEs may not necessarily be related to each other. Rather, their MSE variables may differ significantly from MSE to MSE (or may be logically related). In some embodiments, the MSE variables differ significantly from MSE to MSE, possibly with no logical relation between them, however in the aggregate, a group of working MSEs may achieve a desired energy application goal. A plurality of MSEs that can be executed sequentially or simultaneously to excite a particular field pattern in the energy application zone may be collectively referred to as an "energy delivery scheme." For example, an energy delivery scheme may consist of three MSEs (F(1), $\varphi$(1), A(1)), (F(2), $\varphi$(2), A(2)), (F(3), $\varphi$(3), A(3)). Since there are a virtually infinite number of MSEs, there are a virtually infinite number of different energy delivery schemes, resulting in virtually infinite number of differing field patterns in any given energy application zone (although different MSEs may at times cause highly similar or even identical field patterns). Of course, the number of differing energy deliver schemes may be, in part, a function of the number of MSEs that are available. The invention, in its broadest sense, is not limited to any particular number of MSEs or MSE combinations. Rather, the number of options that may be employed could be as few as two or as many as the designer desires, depending on factors such as intended use, level of desired control, hardware or software resolution and cost.

In some embodiments, the at least one processor may regulate the source to apply electromagnetic energy using "frequency sweeping" and "phase sweeping" in an alternating manner. For example, resonant frequency $f_1$ may be used first, and at frequency $f_1$, two or more phase differences may be executed for applying the energy. Then resonant frequency $f_2$ may be used secondly, at which the same or different phase differences as those used at $f_1$ may be executed for applying the energy. Each combination of frequency and phase difference that is used for exciting the modes is referred to as an "excitation scheme," and the various excitation schemes used for a particular energy application is referred to as an "energy delivery scheme." By using such an energy delivering scheme involving alternating frequency sweeping and phase sweeping, a plurality of resonant modes may be excited at each different resonant frequency.

The plurality of resonant modes excited by a particular energy delivery scheme may result in an accumulated effect of electromagnetic energy application over time. In some instances, the accumulated energy application may be viewed as a linear combination of energy applications via various resonant modes, and the accumulated energy application may be controlled by varying a weight of one or more resonant modes in the linear combination.

In some embodiments, processor 30 may be configured to regulate several components simultaneously, including, for example, phase shifter 54, oscillator 22, splitter 52 and amplifiers 24 and 28, to sequentially cause the application of various MSEs (e.g., by sequentially sweeping over frequencies, phases and/or amplitudes) -- a process known as "MSE sweeping." MSE sweeping may be performed relative to any other parameters applicable to the MS, including, for example, the number, location and/or orientation of antennas, the dimensions of the energy application zone, the location and number of the field adjusting elements, etc. The MSE sweeping of amplitude, frequency and phases is described herein as an example only and is not intended to limit the invention to those particular parameters. Any parameter that defines the MS may be swept during "MSE sweeping."

In accordance with some embodiments of the invention, the at least one processor may be further configured to change a weight of a resonant mode, among the plurality of resonant modes. The intensity of a resonant mode may be proportional to the amplitude of electromagnetic waves that excite that resonant mode. Therefore, the weight of the resonant mode may be changed, for example, by adjusting an amount of the applied electromagnetic energy exciting the resonant mode. For example, processor 30 may be configured to regulate amplifier 24 to adjust the power level at which the electromagnetic energy is applied for exciting a resonant mode. Alternatively or additionally, processor 30 may be configured to adjust the time duration over which the energy is applied for exciting a resonant mode.

In accordance with some embodiments of the invention, the at least one processor may be further configured to determine the weight of the resonant mode such that differing targeted amounts of electromagnetic energy are applied to differing predetermined regions in the object. The term "region" may include any portion of the object, such as a cell, sub-volume, sub-division, discrete sub-space, or any sub-portion of a cavity. For example, the object may include two regions that have differing energy absorption characteristics within the object. For example, in a cup of chunky soup, the first region may contain mostly water at the top layer of the soup, and the second region may contain mostly potato chunks toward the bottom layer of the soup. Because of their differing energy absorption characteristics, it may be beneficial to apply differing amounts of energy to these two regions.

In some embodiments, the processor may determine weights dynamically and/or adaptively, optionally based on feedback from the energy application zone, optionally in the presence of the object. For example, processor 30 may be configured to receive an analog or digital feedback signal from detector 40, indicating an amount of reflected and/or transmitted electromagnetic energy from cavity 20 when a particular resonant mode is excited in the cavity. Processor 30 may then dynamically determine the weight for this particular resonant mode based on the feedback. The processor 30 may, for example, be configured to assign a smaller weight to a resonant mode when the corresponding reflected/transmitted energy is low.

In some instances, the processor may determine the weights based on characteristics of the target energy distribution. For example, a spatial distribution of target energy application in the object may be uneven. On the other hand, each of the excited resonance modes may include some areas with relatively high magnitude of field intensity and some other areas with relatively low magnitudes of field intensity. Thus, in some embodiments, the processor may assign a greater weight to a resonant mode having high intensity areas aligned with areas demanding high energy application.

In some embodiments, the processor may determine two different weights for at least two known modes in order to cause a desired angular shift in the field pattern exited by the two modes. An angular shift may be defined as a change in angle of the EM field intensity maxima relative to the location of the maxima when the two modes are excited with substantially similar weights. The angular shift is measured around the central symmetry axis created by the excitation of the at least two modes. In some embodiments the two modes may be orthogonal to each other and the symmetry axis may be substantially located in the center of the energy application zone. Applying different known weights to the two orthogonal modes may result in a rotation of the maxima intensity area in the field pattern around a central symmetry axis at a desired angle to achieve a desired angular shift. The desired angular shift may continuously change the weights of the modes to cause a complete rotation of the field intensity maxima around the central symmetry axis. Continuous angular shift may result in rotating of the field intensity maxima, which may yield more uniformity in application of EM energy application.

For example, two signals supplied to two radiating elements, respectively, may be represented by $A_1\cos(\omega t)$ and $A_2\sin(\omega t)$, wherein $A_1$ and $A_2$ are the amplitudes (which may correspond to the weight of that mode/signal) of the two signals and may be controlled by the processor 30 to vary in such a manner: $A_1=\cos(\alpha)$ and $A_2=\sin(\alpha)$. According to trigonometric identity, the combination of the two amplified signals are $A_1\cos(\omega t) + A_2\sin(\omega t) = \cos(\alpha)\cos(\omega t) + \sin(\alpha)\sin(\omega t) = \cos(\omega t-\alpha)$. Therefore, the processor may control the phase of the combined signal supplied to the cavity by controlling the amplitude of the individual signals supplied to each of the antennas. Changing the weight (e.g., amplitudes A1 and A2) of each signal may result in different phase shift.

The processor may determine the weights using linear algebra. For example, the excited modes may be used to construct a targeted energy delivery pattern (scheme), and the weights of the excited modes may be solved based on the targeted energy delivery pattern. The excited modes may be predicted, for example, through testing, simulation, or analytical calculation. Using the testing approach, sensors (e.g., small antenna(s)) may be placed in an energy application zone, to measure the field distribution of each mode. The distribution can then be stored in, for example, a look-up table. In a simulated approach, a virtual model may be constructed so that the modes can be excited in a virtual manner. For example, a simulation model of an energy application zone may be performed in a computer. A simulation engine such as CST by CST Germany or HFSS by Ansoft Corp. USA may be used to numerically calculate the field distribution inside the energy application zone. This simulated approach can occur in advance and the known combinations may be stored in a look-up table, or the simulation may be conducted on an as-needed basis during an energy application operation.

Similarly, as an alternative to testing and simulation, calculations may be performed based on an analytical model in order to predict the excited modes based on excitation schemes. For example, given the shape of an energy application zone with known dimensions, the at least one processor may be configured to calculate modes corresponding to a given excitation schemes from analytical equations. As with the simulated approach, the analytical approach may occur well in advance and the known combinations stored in a look-up table, or may be conducted on an as-needed basis during an energy application operation.

In some embodiments, two or more antennas may be used to reject a mode even when they are not positioned at nulls of the mode. For example, at least one of the antennas may be at a non-null position such that the superposed weight of the antennas on the mode is zero. In some other embodiments, a single antenna or an array antenna at a non-null position of a mode may also be configured to reject the mode.

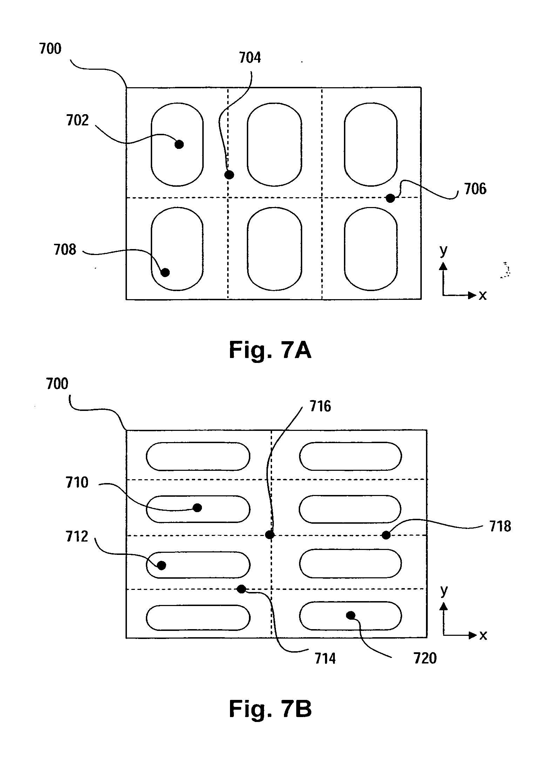

Figs. 7A and 7B further illustrate various positions where an antenna may be placed to excite or not excite a particular mode, in accordance with some embodiments of the invention. For example, in Fig. 7A, a cavity 700 may support a $TM_{320}$ mode. The mode is characterized by local maximum and minimum amplitudes of field intensity. As shown in Fig. 7A, the dash lines correspond to nulls (i.e., zero amplitude of field intensity) of the mode, while the six oval structures correspond to regions where the amplitude of the field intensity is higher than a threshold. More specifically, the amplitude of the field intensity is higher in the center of each of the oval structures and decreases gradually toward the peripheral area. An antenna may be placed at positions 702, 704, 706, or 708 to either excite or not excite this particular mode. For example, when the antenna is placed at position 702, the mode may be excited to a maximum degree, because position 702 corresponds to the location where the amplitude of the field intensity reaches its maximum. As a result, an antenna placed at position 702 will enable application of electromagnetic energy from the antenna to cavity 700 at a maximal rate.

In contrast, when the antenna is placed in position 704 or 706, the mode cannot be excited. Because these two positions correspond to the nulls of the mode, antennas placed at such nulls cannot excite the $TM_{32}$ mode within the cavity. An intermediate position, such as position 708, however, may also be used to excite the mode. Such an intermediate position is neither located at the maximum nor the nulls of the amplitude of field intensity. By placing an antenna in the intermediate position, the mode can be excited, but not to the maximal degree. Therefore, the excitation of mode $TM_{32}$ using an antenna placed in position 708 may be referred to as a regular excitation.

Fig. 7B shows another example of mode excitation. In Fig. 7B, cavity 700 may support a mode $TM_{24}$. According to the nulls and maximums of the amplitude of field intensity, an antenna placed at position 710 or 720 may achieve maximal excitation of mode $TM_{24}$, an antenna placed at position 712 may achieve regular excitation of mode $TM_{24}$, and an antenna placed at position 714, 716, or 718 may not excite mode $TM_{24}$.

In certain embodiments, radiating element (e.g., radiating element 18) may be positioned such that only a single dominant mode at a given frequency may be excited in the energy application zone. For example, referring to Figs. 8A-8D, two dominant modes 802 ($TM_{21}$) and 806 ($TM_{12}$) may be excited in a cavity 800 at a given frequency if cavity 800 is degenerated in the x-y plane having a=b. Cavity 800 may not need to be degenerated also in the z direction for the excitation of 802 and 806 modes. Modes 802 ($TM_{21}$) and 806 ($TM_{12}$) may be excited in the cavity 800 by any single frequency equal to or higher than the cutoff frequency $f_{12}=f_{21}$ of $TM_{21}/TM_{12}$. Some of the frequencies that may excite modes 802 and 806 may be resonant in cavity 800 while other may be propagating or evanescent. In Fig. 8A, an antenna 804 may be placed in the upper wall of cavity 800 in ¼ of the cavity dimension a in the y direction and ¼ of cavity dimension a in the x direction, as illustrated in Figs. 8A and 8C, while in Fig. 8B, two antennas 808 and 810 may be placed at the upper wall of the cavity 800, in ½ of the cavity dimension a in the x direction and ¼ and ¾ of the cavity dimension a in the y direction as illustrated in Figs 8B and 8D. Although both modes 802 and 806 may be excited in cavity 800, when antenna 804 is placed as shown in Fig. 8A, mode 802 may be excited and mode 806 may not be excited. This is because the location of antenna 804 coincides with the null (i.e., zero field intensity) of mode 806, thereby mode 806 cannot be excited. Similarly, when two antennas 808 and 810 are used and placed as shown in Fig. 8B, only mode 806 may be excited and mode 802 may not be excited, because two antennas 808 and 810 are placed at the nulls of mode 802. As used herein, the term "position" may include any one of location, orientation, and polarization, or any combination thereof. Mode 806 of the type $TM_{12}$ may be excited using either antenna 808 or antenna 810, or both.

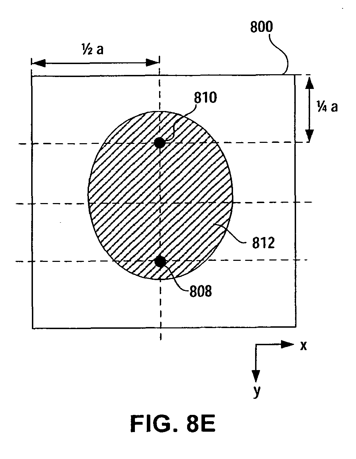

In some embodiments, antennas 808 and 810 may be used to excite modes other than $TM_{12}$. For example, when the excitation from the two antennas is in the same frequency having substantially the same amplitude and the same dipole, mode 812 of the type $TM_{11}$ may be excited, as illustrated in Fig 8E. The excitation from both antennas may contribute to the intensity maximum at the center of plane x-y. In some other embodiments, antennas 808 and 810 may reject the excitation of mode 812. In case the excitation from the two antennas is at the same frequency having substantially the same amplitude but with opposite sign, the contribution from one antenna may cancel the contribution from the other antenna and mode $TM_{11}$ may be rejected. However, mode 806 ($TM_{12}$) may be excited having two maxima intensities each correspond to excitation from different antennas, as illustrated in Fig 8B.

An energy application zone may include a degenerate cavity. For example, cavity 800 in Figs. 8A-8D represents a degenerate cavity, and modes 802 and 806 may be orthogonal to each other. By placing antennas 804 or 808 and 810 in the positions illustrated in Figs. 8A-8D, only one dominant mode may be excited and the other orthogonal mode may not be excited.

A plurality of radiating elements may be configured to supply electromagnetic energy from the source to the zone, and the radiating elements may be positioned to reject at least one mode. For example, using two antennas 808 and 810, at the positions illustrated in Fig. 8B, may be employed to reject mode 812, illustrated in Fig 8E, while optionally exciting mode 806. The rejection or excitation of mode 812 may be facilitated by selecting antennas 808 and 810 to supply energy at the same frequency and at the same amplitude but at opposite directions (phases)rejection of mode 812 may be obtained.

In another example, in Figs 7A and 7B, multiple antennas may be placed simultaneously at various positions shown in the figures. The number and location of antennas used in a specific application may depend on desired mode(s) to be excited, mode(s) to be rejected or not excited, purity of the excited mode(s), control complexity, cost, or other considerations.

The plurality of radiating elements may be associated with a single wall of the energy application zone. For example, in Fig. 8B, two antennas 808 and 810 are placed on the upper wall of cavity 800. By placing antennas on a single wall, the construction of the cavity and antennas may be simplified. In other embodiments, however, antennas may be placed on multiple walls of the cavity, depending on design considerations. For example, to place antennas in multiple walls, the coupling between antennas may be reduced, controllability may be enhanced and noise immunity may be increased.

Processor 30 may be configured to select a subset of the plurality of radiating elements to reject at least one mode. For example, an array of antennas may be provided and processor 30 may be configured to select one or more antennas in the array to excite or reject one or more modes. The array of antennas may occupy a portion of the energy application zone with each antenna in the array corresponding to a spatial location in the zone. The processor may select one or more antennas to supply electromagnetic energy to the zone in accordance with the relationship between the position of the selected antenna(s) and the mode(s). For example, in Figs. 8A-8E, antennas 804, 808, and 810 may constitute an antenna array or a portion of an antenna array. When mode 802 is to be excited and mode 806 to not be excited, processor 30 may select antenna 804 to supply electromagnetic energy and deselect antennas 808 or 810 by, for example, disconnecting them from the source or putting them in idle mode. When mode 806 and/or mode 812 are to be excited and mode 802 to not be excited, the processor may select antennas 808 and 810 and deselect antenna 804. The antenna array may be placed on a single wall of the cavity or on multiple walls on the cavity as discussed above.

In some instances, the calculation of modes may be made without considering the existence of the object in the energy application zone. This may be based on the assumption that the existence of object in the energy application zone does not change the intensity distribution of the modes in the zone (known as "Born approximation.) Born approximation is particularly helpful when the location, size and electromagnetic characteristics of the object are unknown before the energy application. When the properties of the object are known before hand, the calculation may also be made with consideration of the object.

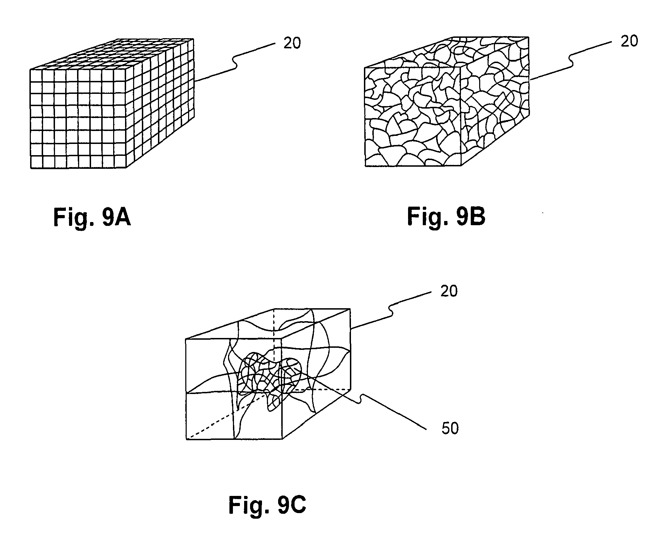

The processor may be further configured to discretize each resonant mode corresponding to spatial field distribution (e.g., field intensity distribution) in the energy application zone, by mapping the resonant mode to a discretized energy application zone. An energy application zone may be discretized, such that a unique memory address of the processor is associated with each discretized subregion. Figs. 9A-9C illustrate examples of discretization strategies for energy application zone 20. The term discretization may also be referred to as, for example, division, separation, or partition. The discretization of an energy application zone into subregions may be predetermined. In some embodiments, a processor may acquire the predetermined discretization information, through, for example, a look up table, information stored in memory, or information encoded in the processor. Alternatively, discretization may occur dynamically using at least one processor (e.g., processor 30 illustrated in Fig. 1). For example, when known dimensions of the zone are provided to the processor, the processor may overlay a regular or irregular division pattern on the volume, divide the zone into subregions, and assign a memory address to each subregion.

The discretization strategy may depend on many factors, including but not limited to: desired resolution, properties of a loss profile, and available field patterns. A loss profile may be understood as any representation of the energy application zone or the object ability to absorb energy across its volume, for example, a 3D (3 dimension) map of a cavity, with or without an object to be heated, wherein each portion of the map is colored in accordance with the ability of that portion to absorb energy. The regions may be of a regular or irregular shape. For example, the division of the zone into subregions may occur through the application of a regular pattern, such as is the case with the division in Fig. 9A. Alternatively, the regions may be any irregular-shape depending on particular needs. For example, the energy application zone may be divided into somewhat random regions as shown in Fig. 9B. In some embodiments, the division may occur by taking into account the location of an object in the zone and/the characteristics of a specific field pattern applied to the zone.

In certain locations of the object or zone, the size of the divided regions may be smaller than in other locations. In other words, the density of regions may vary across the entire object or zone. For example, the dividing strategy may vary depending on whether a region corresponds to a portion of an object, for example object 50, in the energy application zone that is targeted for energy application or whether the region corresponds to a region of the zone where no portion of the object is located or to a region comprising a portion of the object that is not targeted for energy application (each of the two latter regions can be termed "void zone"). In some circumstances, the targeted portion of the object may include the entire object. In some circumstances, non-occupied portion of the zone may be treated as part of the void zone. According to an exemplary strategy, the entire void zone may be treated as a single region. In another exemplary strategy, the void zone may be divided into a plurality of regions in a similar manner as the targeted portion inside the object. In this case, the dividing may be carried out in the entire energy application zone, regardless of the spatial occupation of the object or the spatial location of the targeted portion of the object. Alternatively, the dividing may be carried out separately for the portion of the zone occupied by the targeted portion of the object and the void zone. In yet another example, the void zone may be divided into a plurality of regions in a different manner than that in the targeted portion of the object. For example, the average size of regions in the void zone may be larger than that inside the targeted portion of object 50, as illustrated in Fig. 9C. In other words, the density of regions in the void zone may be lower than that inside the targeted portion of the object. The illustrations of Figs. 9A-C are exemplary only. An infinite number of discretization strategies are contemplated within the scope of the invention, depending on the designer's choice.

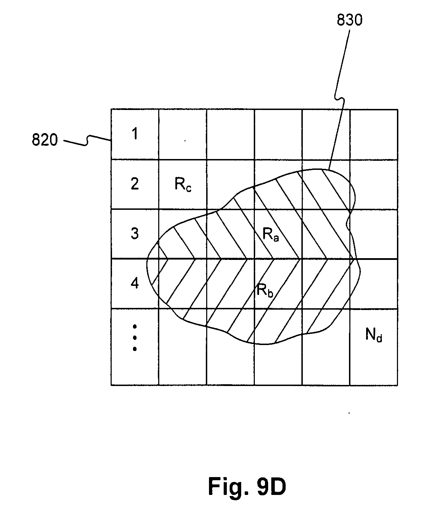

An example of a discretized energy application zone 820 is discussed below in connection with Fig. 9D. A 2D (two dimension) model is illustrated for simplicity; however the same method may be applied to a 3D (three dimension) model. In Fig. 9D, energy application zone 820 may be divided into multiple regions with each region having substantially the same regular squared shape. However, it is contemplated that the methods described below applies to discretizations where zone 820 is divided into regions of irregular shapes and/or unequal sizes. The regions may be labeled from the upper left corner to lower right corner as 1, 2, 3, ..., $N_d$. An object 830 may include more than one region, e.g., regions $R_a$ and $R_b$. Excited modes may be mapped to the regions of the discretized energy application zone, assuming that $N_m$ different field patterns are excited in the zone. Since the energy application zone has been discretized into $N_d$ regions, the j$^{th}$ field pattern may be represented by a series of local electrical field intensities $[I_{1j}, I_{2j}, I_{3j}, ..., I_{Ndj}]$. The electrical field intensity at a particular region of the zone may be proportional to the square of the electrical field magnitude at that region. Therefore, for all excited modes, the local intensities may be collectively written in matrix form as:

$$[I_{11}, I_{21}, I_{31}, ..., I_{Nd1};$$
$$I_{12}, I_{22}, I_{32}, ..., I_{Nd2};$$
$$...$$
$$I_{1Nm}, I_{2Nm}, I_{3Nm}, ..., I_{NdNm}]$$

This matrix may be referred to as the *I* matrix.

In some instances, processor 30 may determine a targeted spatial distribution of energy application. For example, the distribution may be determined based on the spatial distribution of absorption characteristics (also referred to herein as a "loss profile" or "values indicative of energy absorbable in the object") in cavity 20. As another example, the targeted distribution of energy application may be provided by a user of the apparatus. Additionally or alternatively, the targeted distribution of energy application may be provided by other means, for example a readable tag (e.g., an RF/bar-code associated with an object to be processed). In some embodiments, both the targeted distribution of energy application and the loss profile may be mapped to the subregions of the discretized energy application zone. For example, the targeted energy application may be written as a vector $W=[W_1, W_2, W_3, ..., W_{Nd}]$, and the loss profile may be written as a vector $\Sigma=[\sigma_1, \sigma_2, \sigma_3, ..., \sigma_{Nd}]$. Therefore, for each discretized region *i*, a linear equation can be constructed:

$$\sigma_i(I_{i1}\tau_1 + I_{i2}\tau_2 + I_{i3}\tau_3 + \cdots + I_{iNm}\tau_{Nm}) = W_i \quad (4)$$

where $\Gamma=[\tau_1, \tau_2, \tau_3, ..., \tau_{Nm}]$, is the unknown weight vector, with $\tau_j$ being the weight of the j$^{th}$ excited mode. Accordingly, in some embodiments, the following equation may be constructed in matrix form:

$$\Gamma P = W \quad (5)$$

where *P* is a matrix (referred to as the *P* matrix) with $P_{ij}=\sigma_i I_{ij}$. The *P* matrix represents a modified *I* matrix due to the presence of the object. In other words, *P* matrix represents the applicable amount of energy to each region via a particular mode, e.g., taking into account loss properties of that region, e.g., its dielectric loss.

Consistent with some embodiments, the at least processor may be further configured to solve the unknown weight vector $\Gamma$ mathematically. For example, $\Gamma$ may be solved by inverting matrix *P* and multiplied by vector *W* as follows:

$$\Gamma = WP^{-1} \quad (6)$$

While inverting *P* may be the most efficient method for solving the equation, other mathematical methods may be used, including various stationary iterative methods such as the Jacobi method, the Gauss-Seidel method and the Successive over-relaxation method, etc, and various Krylov subspace methods, such as conjugate gradient method (CG), generalized minimal residual method (GMRES) and the biconjugate gradient method (BiCG), etc. Alternatively, the equation may also be solved using optimization approaches, i.e., minimizing the residual $|\mathit{\Gamma}P\text{-}W|$. Iterative methods and optimization methods may be particularly helpful when it is difficult to directly invert $P$, or when inverting $P$ may cause large inaccuracies in the solution (e.g., when the equation system is mathematically ill-conditioned, ill-posed, and/or singular).

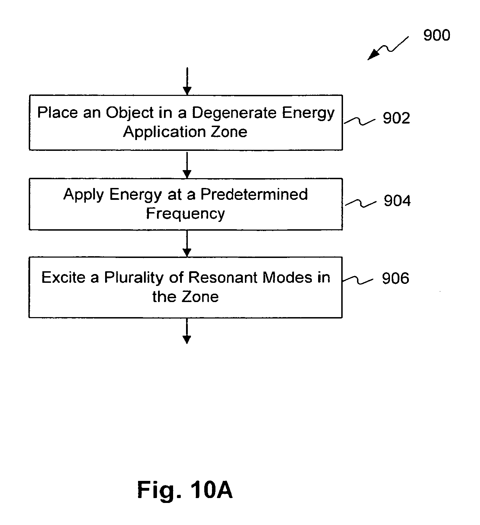

Some embodiments of the invention may further include a method for applying electromagnetic energy to an object. Such an energy application may be accomplished, for example, through at least one processor implementing a series of steps of process 900 such as the one set forth in the flow chart of FIG. 10A.

In accordance with some embodiments of the invention, the method may involve placing the object in a degenerate energy application zone in step 902. For example, object 50 (or a portion thereof) may be placed in cavity 20. Cavity 20 may be a degenerate cavities such as those illustrated in Fig. 2A-2D. Some embodiments may omit this step, and are effective once the object is in the energy application zone.

In accordance with some embodiments of the invention, the method may further involve applying electromagnetic energy at a determined frequency that excites a plurality of resonant modes in the energy application zone, wherein the plurality of resonant modes share a mode family, such as of the same transverse type. For example, the at least one processor may regulate the source to apply the electromagnetic energy at one or more determined frequencies in step 904. By way of one example, the source may be configured to apply energy at particular frequencies (or wavelengths) that meet the modal condition in the zone (i.e., where the applied frequency is less than about four times of the lowest resonant frequency of the energy application zone). By way of another example, the source may be configured to apply energy at resonant frequencies of the degenerate energy application zone. Yet in another example, the source may be configured to apply energy at resonant frequencies determined, for example, by processor 30 based on feedback received from the energy application zone via detector 40, for example.

In step 906, the at least one processor may regulate the application of electromagnetic energy to excite a plurality of resonant modes of the same mode family in the energy application zone. For example, the source may include two or more synchronized radiating elements configured to radiate electromagnetic energy at a constant phase difference. The source may be regulated to vary the phase differences in order to excite a plurality of resonant modes at a single determined frequency. In some instances, the phase differences may be chosen such that orthogonal modes are excited in the degenerate energy application zone. For example, two orthogonal resonant modes $TE_{104}$ and $TE_{401}$ may be excited in the degenerate rectangular cavity, as shown in Fig. 5. The plurality of resonant modes excited at the determined frequency may be of the same transverse type, for example, either transverse electric (TE) or transverse magnetic (TM). In some embodiments, one or more modes (e.g., dominant modes) of the same mode family may be selected to be excited while other modes of the same mode family may be selected to be rejected.

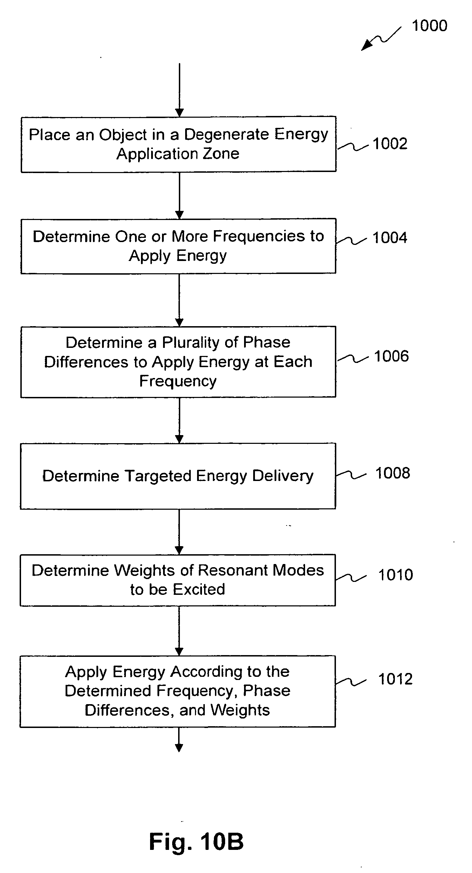

Fig. 10B illustrates another exemplary process 1000 for apply electromagnetic energy to an object in an energy application zone, in accordance with some embodiments of the invention. In step 1002, an object may be placed in a degenerate energy application zone, similar to step 902 as described above. Some embodiments may omit this step, and are effective once the object is in the energy application zone. In step 1004, the processor may determine a frequency or a set of frequencies, at which the electromagnetic energy may be applied to the degenerate energy application zone. In some examples, the processor may first determined the lowest resonant frequency associated with the degenerated energy application zone, based on the geometry of the zone. Alternatively, the processor may determine the lowest resonant frequency associated with an object placed in the energy application zone. The processor may then determine one or more frequencies according to the modal condition, based on the lowest resonant frequency. In other examples, the processor may determine the frequencies as resonant frequencies of the degenerate energy application zone, such as based on equations (1)-(3), referred to earlier. In some configurations of the invention, resonant frequencies that satisfy the modal condition may be determined and in others, the processor may be configured to receive user selected frequencies. In some embodiments, step 1004 may be performed once for a given energy application zone, e.g., to a given cavity dimension.

In step 1006, the processor may determine a plurality of phase differences to apply energy at each of the selected frequencies. The phase differences may be determined, for example, according to the shape of the degenerate energy application zone. For example, in a degenerate cavity that has an octagonal cross-section (e.g., cavity 62), $\Delta\varphi=0°$, 90°, 180°, and 270° may be determined. In some configurations of the invention, phase differences may be determined such that energy applied at each phase difference may excite resonant modes that are orthogonal to each other. For example, in a rectangular cavity with a square cross-section (e.g., cavity 62), two phase differences that are 180° apart from each other may be determined to excite two orthogonal modes. Alternatively, the processor may be configured to receive user-selected phase differences.

In step 1008, the processor may determine a targeted energy application. The targeted energy application may be a distribution of energy applicable to the object. Targeted energy application may be determined based on the energy absorption characteristics or other properties associated with differing regions of the object. Targeted energy application may include differing amounts of energy at differing regions of the object. For example, if a dish contains vegetables on one side and meat on another side, the targeted energy application may be determined such that a larger amount of energy is applied to the meat than that applied to the vegetables.

Regions and differing amounts of energy may be specified by a user as a function of known characteristics of the object. In other embodiments, regions and differing amounts of energy may be specified by other means, for example a readable tag (e.g., an RF/bar-code associated with an object to be processed). Alternatively or additionally, processor 30 may be configured to sense the location of the object and energy absorption characteristics within the object. Processor 30 may then determine to which regions energy will be applied and the targeted amount of energy that should be applied to each region. For example, in connection with Fig. 1, processor 30 may determine the characteristics of object 50 using feedback signals acquired via radiating elements 18, and detected by detector 40. In some instances, the targeted energy application may be discretized using discretization strategies such as those shown in Fig. 9A-9C. For example, the targeted energy application may be discretized into a vector W.

In step 1010, the processor may determine weights of the resonant modes to be excited in the zone, e.g., in order to achieve the targeted energy application. Alternatively or additionally, the processor may determine weights of the resonant modes in order to obtain angular shift in the field pattern exited by the two modes (as discussed above). Each combination of frequencies, as determined in step 1004, and phase differences, as determined in step 1006, may be referred to as an energy delivery scheme. Each energy delivery scheme, when executed to regulate the source to apply energy to the object, may excite a resonant mode or a combination of resonant modes in the energy application zone. The processor may predict the field distributions of these resonant modes through testing, simulation, or analytical calculation. For example, an *I* matrix may be constructed which records the various resonant modes in a discretized manner. In some embodiments, the weights, i.e., vector $\Gamma$, may be calculated mathematically based on linear algebra, such as equations (6) referred to earlier.

In step 1012, the processor may regulate the source to apply energy to the object according to the determined energy delivery schemes (e.g., combinations of frequencies and phase differences), and the respective weights. For example, the source may be regulated as described in connection with Figs. 6A and 6B.

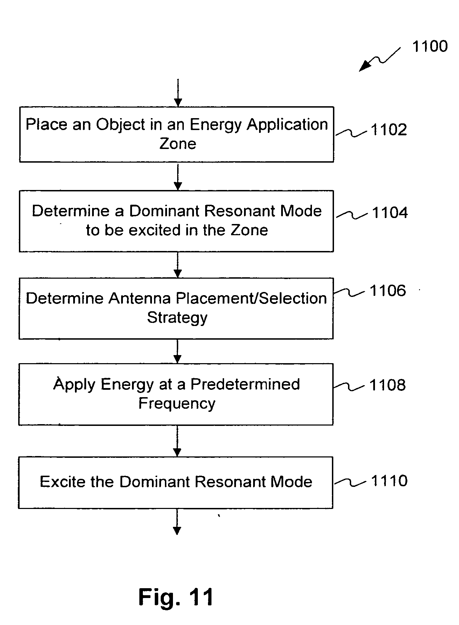

Some embodiments of the invention may further include a method for applying electromagnetic energy to an object. Such an energy application may be accomplished, for example, through at least one processor implementing a series of steps of process 1100 such as the one set forth in the flow chart of Fig. 11.

The method of Fig. 11 may include placing an object in an energy application zone (step 1102). In some embodiments, the energy application zone may be a degenerate energy application zone. For example, object 50 (or a portion thereof) may be placed in cavity 20. In some embodiments, cavity 20 may include a degenerate cavity, for example those illustrated in Figs. 2A-2D. Some embodiments may omit this step, and are effective once the object is in the energy application zone.

In some embodiments, the method may further involve determining a dominant mode to be excited in the energy application zone, in step 1104. For example, mode 802 (as shown in Fig. 8A) may be the desired dominant mode to be excited. In some embodiments, the modes and their respective weights may be determined as discussed in reference to step 1010 of Fig. 10B.

In step 1106, the antenna placement/selection/orientation strategy may be determined. The antenna placement may be predetermined for a specific mode excitation or may be dynamically determined during an energy application process. The desired placement of antennas may also be achieved by selecting one or more antennas in an antenna array, e.g., by disconnecting or connecting one or more antennas. In some embodiments, disconnecting may be obtained by not supplying EM energy to the antenna to be disconnected. Processor 30 may determine the selection strategy depending on a specific mode to be excited or rejected.

The method may further involve applying electromagnetic energy at a predetermined frequency (step 1108) that excites one or more modes in the energy application zone. For example, processor 30 may regulate the source to apply the electromagnetic energy at one or more predetermined frequencies. In some embodiments, the source may be configured to apply energy at resonant frequencies of the degenerate energy application zone.

In step 1110, processor 30 may regulate the source to excite a dominant mode (e.g., the dominant mode determined in step 1104) in the energy application zone. For example, by supplying electromagnetic energy through a specific antenna or antenna combination at particular locations, the dominant mode may be excited and one or more other modes may be rejected.

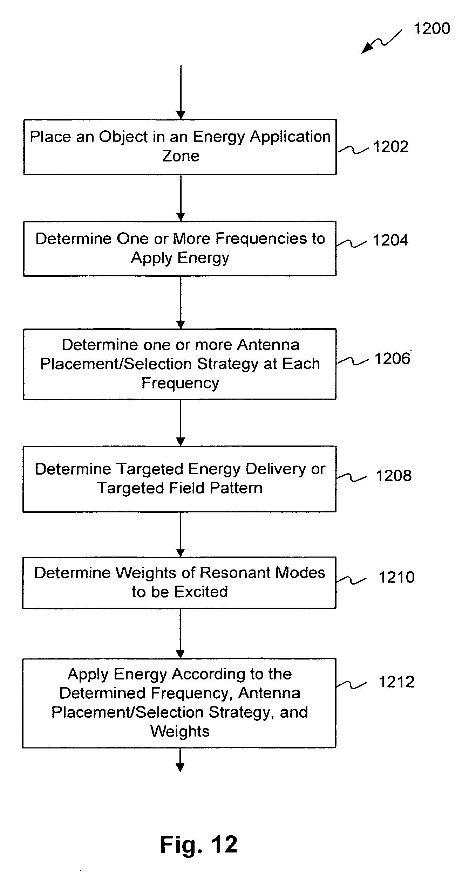

Fig. 12 illustrates another exemplary process 1200 for applying electromagnetic energy to an object in an energy application zone in accordance with some embodiments of the invention. In step 1202, an object may be placed in an energy application zone, similar to step 1102, as described above. The energy application zone may be a degenerate energy application zone. Some embodiments may omit this step, and are effective once the object is in the energy application zone. In step 1204, processor 30 may determine a frequency or a set of frequencies at which electromagnetic energy may be applied to the energy application zone. In some embodiments, processor 30 may first determine the lowest resonant frequency associated with the energy application zone, based on the geometry of the zone. Processor 30 may then determine one or more frequencies based on the lowest resonant frequency. In other embodiments, processor 30 may determine the frequencies as resonant frequencies of the degenerate energy application zone based on equations (1)-(3), for example. Processor 30 may also determine frequencies based on user input. Additionally or alternatively, processor 30 may determine frequencies based on other inputs, e.g., from a tag (e.g., a barcode) associated with the object. In some embodiments, step 1204 may be performed once for a given energy application zone, e.g., to a given cavity dimension.

In step 1206, processor 30 may determine one or more antenna placement/selection/orientation strategies at each selected frequency. For example, processor 30 may determine a desired dominant mode corresponding to each of the selected frequencies and determine appropriate antenna locations to excite the desired dominant modes and/or to reject one or more undesired modes.

In step 1208, processor 30 may determine a targeted energy delivery or a targeted field pattern corresponding to a desired energy application or delivery profile in the energy application zone. The targeted energy delivery profile may include a distribution of energy applicable to the object. In some embodiments, the targeted energy delivery profile may be determined based on the energy absorption characteristics or other properties associated with differing regions of the object. In some embodiments, the targeted energy delivery profile may include differing amounts of energy at differing regions of the object. For example, if a dish includes vegetables on one side and meat on another side, the targeted energy delivery profile may be determined such that a larger amount of energy is applied to the meat than to the vegetables.

A desired energy delivery profile can be achieved by manipulating one or more MSEs to generate one or more targeted or desired field patterns through which a desired amount of energy may be applied to specific locations in the cavity one by one. That is, each successive field pattern application may apply a certain amount of energy to certain locations within the energy application zone. After a series of field pattern applications, the overall /net/time integrated amount of energy applied to an object or region within the energy application zone may correspond to the desired energy delivery profile.

In some embodiments, regions within the energy application zone and specific amounts of energy to be applied to those regions may be specified by a user as a function of known characteristics of the object. Alternatively or additionally, processor 30 may be configured to sense the location of the object and energy absorption characteristics within the object. Processor 30 may then determine the regions to which energy will be applied and the targeted amount of energy that should be applied to each region. Processor 30 may then compile an energy delivery profile to provide a certain amount of energy to the volume that corresponds to object 50 (or even to various portions of object 50) and another amount of energy to the volume surrounding object 50. Processor 30 would then determine the combination of field patterns to apply in order to provide the desired energy delivery profile.

In some embodiments, the targeted energy delivery profile may be discretized according to a discretization of cavity 20, using discretization strategies such as those shown in Fig. 9A-9C. For example, the targeted energy delivery profile may be discretized into a vector $W$.

In step 1210, processor 30 may determine weights of the modes to be excited in the zone, in order to achieve the targeted energy delivery profile or targeted field patterns. Each combination of frequencies, as determined in step 1204, and optionally phase differences, may be referred to as an energy delivery scheme. Each energy delivery scheme, when executed to regulate the source to apply energy to the object, may excite a mode or a combination of modes in the energy application zone. Exciting and/or rejecting one or more modes may be achieved by antenna placement/selection/orientation strategies, as determined in step 1206. Processor 30 may predict the field distributions of these modes through testing, simulation, or analytical calculation. For example, an $I$ matrix may be constructed which records the various modes in a discretized manner. In some embodiments, the weights, i.e., vector $\Gamma$, may be calculated mathematically based on linear algebra using, e.g., equation (6).

In step 1212, processor 30 may regulate the source to apply energy to the object according to the determined energy delivery schemes (e.g., combinations of frequencies and antenna placement/selection strategies), and the respective weights. For example, the source may be regulated as described in connection with Figs. 6A and 6B.

The utilization of antenna location to excite or reject modes may significantly enhance the noise immunity and resolution capability of the spatially controlled energy delivery technique. By using one or more antennas placed in specific positions relative to the desired or undesired modes, an additional degree of freedom may be available to control energy delivery.

Various examples of the invention are described herein in connection with energy application performed in cavity 20. Persons of ordinary skill in the art will appreciate that core; inventive principles of energy application discussed herein may be applied across various forms of energy application zones, and for a variety of purposes other than or including heating. In many respects, it is these broader principles that are the subject of the appended claims.

In the foregoing Description of Exemplary Embodiments, various features are grouped together in a single embodiment for purposes of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Description of the Exemplary Embodiments, with each claim standing on its own as a separate embodiment of the invention.

Moreover, it will be apparent to those skilled in the art from consideration of the specification and practice of the present disclosure that various modifications and variations can be made to the disclosed systems and methods without departing from the scope of the invention, as claimed. Thus, it is intended that the specification and examples be considered as exemplary only, with a true scope of the present disclosure being indicated by the following claims and their equivalents.

**Claims**

1.  An apparatus for applying electromagnetic energy at a frequency in the frequency range of 1MHz to 100 GHz to heat an object (50), the apparatus comprising:

    a degenerate cavity (62, 64, 800):

       at least one source of electromagnetic energy and a plurality of radiating elements (18, 32, 34) for applying energy to heat an object placed in the degenerate cavity; and

    a processor (30) configured to:

       assign respective weights to a plurality of resonant modes sharing a mode family, wherein two different weights are assigned for at least two of the plurality of resonant modes, and the modes in the mode family are all of the same type and supported by the cavity at a single frequency, the type being one of transverse electric, transverse magnetic, transverse electromagnetic and hybrid,
       and
       regulate the at least one source to apply electromagnetic energy for exciting the plurality of resonant modes according to the assigned weights, by adjusting respective amounts of electromagnetic energy exciting each of the plurality of resonant modes.

2.  An apparatus according to claim 1, wherein the processor (30) is configured to assign the weights based on feedback received from the cavity (62, 64, 800) in a presence of the object (50).

3.  An apparatus according to any preceding claim, wherein the processor (30) is configured to regulate the source to control a phase difference between two electromagnetic waves at the single frequency, wherein each resonant mode excited in the cavity (62, 64, 800) corresponds to a distinct phase difference.

4.  An apparatus according to any preceding claim, wherein the processor (30) is configured to change the two different weights to cause an angular shift of a field pattern excited by the electromagnetic energy application.

5.  An apparatus according to any preceding claim, wherein the processor (30) is configured to assign the two different weights such that differing targeted amounts of electromagnetic energy are applied to differing predetermined regions in the cavity (62, 64, 800).

6.  An apparatus according to any preceding claim, wherein the processor (30) is configured to:

       select at least two radiating elements from the plurality of radiating elements (18, 32, 34); and
       select at least one desired mode and at least one undesired mode;
       control an electromagnetic energy application to the selected radiating elements such that the at least one desired mode is excited and the at least one undesired mode is rejected.

7.  An apparatus according to any one of claims 1 to 6, wherein the processor (30) is configured to determine the single frequency based on feedback received from the cavity (62, 64, 800) with the object (50) present.

8.  A method of applying electromagnetic energy at a frequency in the frequency range of 1 MHz to 100 GHz to heat an object (50) in a degenerate cavity (62, 64, 800) via at least one source of electromagnetic energy and a plurality of radiating elements (18, 32, 34), the method comprising:

assigning respective weights to a plurality of resonant modes sharing a mode family, wherein two different weights are assigned for at least two of the plurality of resonant modes and the modes in the mode family are all of the same type and supported by the cavity at a single frequency, the type being one of transverse electric, transverse magnetic, transverse electromagnetic and hybrid; and

applying electromagnetic energy by exciting the at least two resonant modes according to the assigned weights, including adjusting respective amounts of electromagnetic energy exciting each of the at least two resonant modes.

**9.** A method according to claim 8, comprising:

receiving feedback from the cavity (62, 64, 800) in a presence of the object (50); and
assigning the weights based on the received feedback.

**10.** A method according to claim 8 or claim 9, wherein regulating includes controlling a phase difference between two electromagnetic waves at the single frequency, wherein each resonant mode excited in the cavity corresponds to a distinct phase difference.

**11.** A method according to any of claims 8 to 10, including assigning the two different weights such that differing targeted amounts of electromagnetic energy are applied to differing predetermined regions in the cavity (62, 64, 800).

**12.** A method according to any one of claims 9 to 11, including determining the single frequency based on feedback received from the cavity (62, 64, 800) with the object (50) present.

**13.** A method according to any one of claims 9 to 12, comprising:

changing the two different weights to cause an angular shift of a field pattern excited by the electromagnetic energy application.

**14.** A method according to any one of claims 9 to 13, comprising:

selecting at least two radiating elements from the plurality of radiating elements (18, 32, 34);
selecting at least one desired mode and at least one undesired mode; and
controlling electromagnetic energy application to the selected radiating elements such that the at least one desired mode is excited and the at least one undesired mode is rejected.

**Patentansprüche**

**1.** Vorrichtung für das Anwenden elektromagnetischer Energie bei einer Frequenz im Frequenzbereich von 1 MHz bis 100 GHz zum Erwärmen eines Objekts (50), wobei die Vorrichtung Folgendes umfasst:

einen degenerierten Hohlraum (62, 64, 800);
mindestens eine Quelle von elektromagnetischer Energie und eine Mehrzahl von Strahlungselementen (18, 32, 34) für das Anwenden von Energie zum Erwärmen eines Objekts, das im degenerierten Hohlraum platziert ist; und
einen Prozessor (30), der für Folgendes konfiguriert ist:

Zuordnen von entsprechenden Gewichten an eine Mehrzahl von Resonanzmoden, die eine Modusfamilie gemein haben, wobei zwei unterschiedliche Gewichte für mindestens zwei der Mehrzahl von Resonanzmoden zugeordnet werden und die Moden in der Modenfamilie alle vom selben Typ sind und durch den Hohlraum auf einer Einzelfrequenz unterstützt werden, wobei der Typ einer von transversal elektrisch, transversal magnetisch, transversal elektromagnetisch und gemischt ist, und
Regeln der mindestens einen Quelle, um elektromagnetische Energie für das Anregen der Mehrzahl von Resonanzmoden gemäß den zugeordneten Gewichten anzuwenden, indem entsprechende Mengen elektromagnetischer Energie angepasst werden, die jeden der Mehrzahl von Resonanzmoden anregen.

**2.** Vorrichtung nach Anspruch 1, wobei der Prozessor (30) konfiguriert ist, die Gewichte auf der Grundlage einer vom Hohlraum (62, 64, 800) empfangenen Rückmeldung in einer Anwesenheit des Objekts (50) zuzuordnen.

3. Vorrichtung nach einem der vorhergehenden Ansprüche, wobei der Prozessor (30) konfiguriert ist, die Quelle zu regeln, um eine Phasendifferenz zwischen zwei elektromagnetischen Wellen auf der Einzelfrequenz zu steuern, wobei jeder im Hohlraum (62, 64, 800) angeregte Resonanzmodus einer gesonderten Phasendifferenz entspricht.

4. Vorrichtung nach einem der vorhergehenden Ansprüche, wobei der Prozessor (30) konfiguriert ist, die zwei unterschiedlichen Gewichte zu ändern, um eine Phasenverschiebung eines von der elektromagnetischen Energieanwendung angeregten Feldmusters zu bewirken.

5. Vorrichtung nach einem der vorhergehenden Ansprüche, wobei der Prozessor (30) konfiguriert ist, die zwei unterschiedlichen Gewichte derart zuzuordnen, dass unterschiedliche zielgerichtete Mengen von elektromagnetischer Energie auf unterschiedliche vorbestimmte Regionen im Hohlraum (62, 64, 800) angewandt werden.

6. Vorrichtung nach einem der vorhergehenden Ansprüche, wobei der Prozessor (30) für Folgendes konfiguriert ist:

   Auswählen von mindestens zwei Strahlungselementen aus der Mehrzahl von Strahlungselementen (18, 32, 34); und
   Auswählen von mindestens einem erwünschten Modus und mindestens einem unerwünschten Modus;
   Steuern einer elektromagnetischen Energieanwendung auf die ausgewählten Strahlungselemente, sodass der mindestens eine erwünschte Modus angeregt wird und der mindestens eine unerwünschte Modus zurückgewiesen wird.

7. Vorrichtung nach einem der Ansprüche 1 bis 6, wobei der Prozessor (30) konfiguriert ist, die Einzelfrequenz auf der Grundlage einer vom Hohlraum (62, 64, 800) empfangenen Rückmeldung in Anwesenheit des Objekts (50) zu bestimmen.

8. Verfahren für das Anwenden elektromagnetischer Energie mit einer Frequenz im Frequenzbereich von 1 MHz bis 100 GHz zum Erwärmen eines Objekts (50) in einem degenerierten Hohlraum (62, 64, 800) durch mindestens eine Quelle von elektromagnetischer Energie und eine Mehrzahl von Strahlungselementen (18, 32, 34), wobei das Verfahren Folgendes umfasst:

   Zuordnen von entsprechenden Gewichten an eine Mehrzahl von Resonanzmoden, die eine Modenfamilie gemein haben, wobei zwei unterschiedliche Gewichte für mindestens zwei der Mehrzahl von Resonanzmoden zugeordnet werden und die Moden in der Modenfamilie alle vom selben Typ sind und durch den Hohlraum auf einer Einzelfrequenz unterstützt werden, wobei der Typ einer von transversal elektrisch, transversal magnetisch, transversal elektromagnetisch und gemischt ist; und
   Anwenden von elektromagnetischer Energie durch das Anregen der mindestens zwei Resonanzmoden gemäß den zugeordneten Gewichten, einschließlich des Anpassens entsprechender Mengen elektromagnetischer Energie, die jeden der mindestens zwei Resonanzmoden anregen.

9. Verfahren nach Anspruch 8, umfassend:

   Empfangen einer Rückmeldung vom Hohlraum (62, 64, 800) in einer Anwesenheit des Objekts (50); und
   Zuordnen der Gewichte auf der Grundlage der empfangenen Rückmeldung.

10. Verfahren nach Anspruch 8 oder Anspruch 9, wobei das Regeln das Steuern einer Phasendifferenz zwischen zwei elektromagnetischen Wellen auf der Einzelfrequenz einschließt, wobei jeder im Hohlraum angeregte Resonanzmodus einer gesonderten Phasendifferenz entspricht.

11. Verfahren nach einem der Ansprüche 8 bis 10, einschließlich des Zuordnen der zwei unterschiedlichen Gewichte, sodass unterschiedliche zielgerichtete Mengen von elektromagnetischer Energie auf unterschiedliche vorbestimmte Regionen im Hohlraum (62, 64, 800) angewandt werden.

12. Verfahren nach einem der Ansprüche 9 bis 11, einschließlich Bestimmen der Einzelfrequenz auf der Grundlage einer vom Hohlraum (62, 64, 800) empfangenen Rückmeldung in Anwesenheit des Objekts (50).

13. Verfahren nach einem der Ansprüche 9 bis 12, umfassend:

   Ändern der zwei unterschiedlichen Gewichte, um eine Phasenverschiebung eines von der elektromagnetischen Energieanwendung angeregten Feldmusters zu bewirken.

**14.** Verfahren nach einem der Ansprüche 9 bis 13, umfassend:

Auswählen von mindestens zwei Strahlungselementen aus der Mehrzahl von Strahlungselementen (18, 32, 34);
Auswählen von mindestens einem erwünschten Modus und mindestens einem unerwünschten Modus; und
Steuern einer elektromagnetischen Energieanwendung auf die ausgewählten Strahlungselemente, sodass der mindestens eine erwünschte Modus angeregt wird und der mindestens eine unerwünschte Modus zurückgewiesen wird.


**Revendications**

**1.** Appareil d'application d'une énergie électromagnétique à une fréquence dans la plage de fréquences de 1 MHz à 100 GHz pour chauffer un objet (50), l'appareil comprenant :

une cavité dégénérée (62, 64, 800) ;
au moins une source d'énergie électromagnétique et une pluralité d'éléments radiants (18, 32, 34) pour appliquer de l'énergie pour chauffer un objet placé dans la cavité dégénérée ; et
un processeur (30) configuré de façon à :

attribuer des poids respectifs à une pluralité de modes résonants partageant une famille de modes, où deux poids différents sont attribués à au moins deux de la pluralité de modes résonants et les modes dans la famille de modes sont tous du même type et sont supportés par la cavité à une seule fréquence, le type étant l'un parmi électrique transverse, magnétique transverse, électromagnétique transverse et hybride, et réguler la au moins une source pour appliquer une énergie électromagnétique pour exciter la pluralité de modes résonants en fonction des poids attribués, par ajustement des quantités respectives d'énergie électromagnétique excitant chacun de la pluralité de modes résonants.

**2.** Appareil selon la revendication 1, dans lequel le processeur (30) est configuré de façon à attribuer les poids en fonction d'un retour reçu de la cavité (62, 64, 800) en présence de l'objet (50).

**3.** Appareil selon une quelconque revendication précédente, dans lequel le processeur (30) est configuré de façon à réguler la source pour contrôler la différence de phases entre deux ondes électromagnétiques à la fréquence unique, dans lequel chaque mode résonant excité dans la cavité (62, 64, 800) correspond à une différence de phases distincte.

**4.** Appareil selon une quelconque revendication précédente, dans lequel le processeur (30) est configuré de façon à modifier les deux poids différents pour provoquer un décalage angulaire d'un schéma de champ excité par l'application de l'énergie électromagnétique.

**5.** Appareil selon une quelconque revendication précédente, dans lequel le processeur (30) est configuré de façon à attribuer les deux poids différents de sorte que les quantités ciblées différentes d'énergie électromagnétique soient appliquées à différentes régions prédéterminées dans la cavité (62, 64, 800).

**6.** Appareil selon une quelconque revendication précédente, dans lequel le processeur (30) est configuré de façon à :

sélectionner au moins deux éléments radiants parmi la pluralité d'éléments radiants (18, 32, 34) ; et
sélectionner au moins un mode souhaité et au moins un mode non souhaité ;
contrôler l'application d'une énergie électromagnétique aux éléments radiants sélectionnés de sorte que le au moins un mode souhaité soit excité et le au moins un mode non souhaité soit rejeté.

**7.** Appareil selon l'une quelconque des revendications 1 à 6, dans lequel le processeur (30) est configuré de façon à déterminer la fréquence unique en fonction d'un retour reçu de la cavité (62, 64, 800), l'objet (50) étant présent.

**8.** Procédé d'application d'une énergie électromagnétique à une fréquence dans la plage de fréquences de 1 MHz à 100 GHz pour chauffer un objet (50), dans une cavité dégénérée (62, 64, 800) par l'intermédiaire d'au moins une source d'énergie électromagnétique et d'une pluralité d'éléments radiants (18, 32, 34), le procédé comprenant :

l'attribution de poids respectifs à une pluralité de modes résonants partageant une famille de modes, où deux poids différents sont attribués à au moins deux de la pluralité de modes résonants et les modes dans la famille de modes sont tous du même type et sont supportés par la cavité à une seule fréquence, le type étant l'un parmi électrique transverse, magnétique transverse, électromagnétique transverse et hybride ; et application d'une énergie électromagnétique par excitation des au moins deux modes résonants en fonction des poids attribués, y compris par ajustement des quantités respectives d'énergie électromagnétique excitant chacun des au moins deux modes résonants.

**9.** Procédé selon la revendication 8, comprenant :

la réception d'un retour de la cavité (62, 64, 800) en présence de l'objet (50) ; et
l'attribution des poids en fonction du retour reçu.

**10.** Procédé selon la revendication 8 ou la revendication 9, dans lequel la régulation comprend le contrôle d'une différence de phases entre deux ondes électromagnétiques à la fréquence unique, dans lequel chaque mode résonant excité dans la cavité correspond à une différence de phases distincte.

**11.** Procédé selon l'une quelconque des revendications 8 à 10, comprenant l'attribution des deux poids différents de sorte que des quantités ciblées différentes d'énergie électromagnétique soient appliquées à différentes régions prédéterminées dans la cavité (62, 64, 800).

**12.** Procédé selon l'une quelconque des revendications 9 à 11, comprenant la détermination de la fréquence unique en fonction d'un retour reçu de la cavité (62, 64, 800), l'objet (50) étant présent.

**13.** Procédé selon l'une quelconque des revendications 9 à 12, comprenant :

la modification des deux poids différents pour provoquer un décalage angulaire d'un schéma de champ excité par l'application de l'énergie électromagnétique.

**14.** Procédé selon l'une quelconque des revendications 9 à 13, comprenant :

la sélection d'au moins deux éléments radiants parmi la pluralité d'éléments radiants (18, 32, 34) ;
la sélection d'au moins un mode souhaité et d'au moins un mode non souhaité ; et
le contrôle de l'application d'une énergie électromagnétique aux éléments radiants sélectionnés de sorte que le au moins un mode souhaité soit excité et le au moins un mode non souhaité soit rejeté.

Fig. 1

Fig. 2B

Fig. 2D

Fig. 2A

Fig. 2C

Fig. 3B

Fig. 3A

EP 2 446 703 B1

n=3

m=2

**Fig. 4A**

y

x

m=2

l=4

z

x

**Fig. 4B**

n=3

l=4

y

z

**Fig. 4C**

TE$_{104}$

$x$ $z$

Fig. 5A

TE$_{401}$

$x$ $z$

Fig. 5B

Fig. 5C

Fig. 6A

**Fig. 6B**

EP 2 446 703 B1

FIG. 6C

**Fig. 7A**

**Fig. 7B**

**FIG. 8A**

**FIG. 8B**

**FIG. 8C**

**FIG. 8D**

**FIG. 8E**

Fig. 9A

Fig. 9B

Fig. 9C

EP 2 446 703 B1

**Fig. 9D**

900

Place an Object in a Degenerate Energy Application Zone ~ 902

Apply Energy at a Predetermined Frequency ~ 904

Excite a Plurality of Resonant Modes in the Zone ~ 906

# Fig. 10A

1000

Place an Object in a Degenerate Energy
Application Zone — 1002

Determine One or More Frequencies to
Apply Energy — 1004

Determine a Plurality of Phase
Differences to Apply Energy at Each
Frequency — 1006

Determine Targeted Energy Delivery — 1008

Determine Weights of Resonant Modes
to be Excited — 1010

Apply Energy According to the
Determined Frequency, Phase
Differences, and Weights — 1012

# Fig. 10B

1100

Place an Object in an Energy Application Zone ⟋1102

Determine a Dominant Resonant Mode to be excited in the Zone ⟋1104

Determine Antenna Placement/Selection Strategy ⟋1106

Apply Energy at a Predetermined Frequency ⟋1108

Excite the Dominant Resonant Mode ⟋1110

# Fig. 11

1200

Place an Object in an Energy Application Zone — 1202

Determine One or More Frequencies to Apply Energy — 1204

Determine one or more Antenna Placement/Selection Strategy at Each Frequency — 1206

Determine Targeted Energy Delivery or Targeted Field Pattern — 1208

Determine Weights of Resonant Modes to be Excited — 1210

Apply Energy According to the Determined Frequency, Antenna Placement/Selection Strategy, and Weights — 1212

**Fig. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9107069 A1

**Non-patent literature cited in the description**

- **COLLIN, ROBERT E.** Foundations for Microwave Engineering. Wiley-Interscienc, 2001